# EUROPEAN PATENT APPLICATION

(11) **EP 4 792 631 A1**
(43) Date of publication of application: **19.08.2026**
(21) Application number: 25226613.5
(22) Date of filing: 22.12.2025
(51) Int. Cl.: A01B 69/00, A01B 79/00, E02F 9/20

(54) **RUT DETECTION AND MITIGATION FOR WORK MACHINES**

(30) Priority: 13.02.2025 US 202519053035
(71) Applicant: Deere & Company, Moline, IL 61265 (US)
(72) Inventor: ANDERSON, Noel W, Fargo (US); BURBACH, Stephen, Illinois (US)
(74) Representative: Reddie & Grose LLP

(57) **Abstract**

Rutting data associated with a rut in a ground surface at a worksite is used to determine rut characteristics associated with the rut. Location data indicative of a current location of a work machine relative to the rut is acquired. Control data is generated to cause an actuator of the work machine to perform a mitigation operation based on the rut characteristics and the current location of the work machine.

## Description

### TECHNICAL FIELD

This disclosure relates generally to agricultural machinery, and more specifically to rut detection and mitigation for work machines.

### BACKGROUND

In modern agricultural operations, work machines such as tractors, harvesters, and sprayers are increasingly equipped with advanced computer systems and sensors to optimize field operations. These technological advancements have significantly improved productivity and efficiency in farming practices. However, one persistent challenge that continues to impact agricultural operations is the presence of ruts and other terrain anomalies in fields. These irregularities in the ground surface can be caused by various factors, including heavy machinery traffic, irrigation systems, and natural erosion processes. The detection and mitigation of these terrain anomalies pose technical challenges for agricultural systems, particularly in maintaining optimal vehicle performance, preserving soil health, and ensuring consistent crop management across diverse field conditions.

### SUMMARY

Disclosed herein are implementations of rut detection and mitigation for work machines.

In one embodiment, a computer-implemented method is provided. In this embodiment, the method includes determining, based on rutting data associated with a rut in a ground surface at a worksite, rut characteristics associated with the rut wherein the rutting data comprises at least one of precipitation data, soil data, tillage history data, soil compaction data, shadow data, work machine data, or user input data; acquiring location data indicative of a current location of a work machine relative to the rut; and generating control data to cause an actuator of the work machine to perform a mitigation operation based on the rut characteristics and the current location.

In another embodiment, a system is provided. In this embodiment, the system includes one or more memories and one or more processors communicatively coupled to the one or more memories and configured to execute instructions stored in the one or more memories to cause the system to: determine, based on rutting data associated with a rut in a ground surface at a worksite, rut characteristics associated with the rut wherein the rutting data comprises at least one of precipitation data, soil data, tillage history data, soil compaction data, shadow data, work machine data, or user input data; acquire location data indicative of a current location of a work machine relative to the rut; and generate control data to cause an actuator of the work machine to perform a mitigation operation based on the rut characteristics and the work current location.

In yet another embodiment, one or more non-transitory computer readable media storing instructions operable to cause one or more processors to perform operations are provided. In this embodiment, the operations include determining, based on rutting data associated with a rut in a ground surface at a worksite, rut characteristics associated with the rut wherein the rutting data comprises at least one of precipitation data, soil data, tillage history data, soil compaction data, shadow data, work machine data, or user input data; acquiring location data indicative of a current location of a work machine relative to the rut; and generating control data to cause an actuator of the work machine to perform a mitigation operation based on the rut characteristics and the work current location.

### BRIEF DESCRIPTION OF THE DRAWINGS

The disclosure is best understood from the following detailed description when read in conjunction with the accompanying drawings. It is emphasized that, according to common practice, the various features of the drawings are not to-scale. On the contrary, the dimensions of the various features are arbitrarily expanded or reduced for clarity.
FIG. 1 is a block diagram of a system for rut detection and mitigation.
FIG. 2 is an example of a computing device.
FIG. 3 is an example of a process for rut detection and mitigation.
FIG. 4 is a block diagram illustrating an example associated with machine learning for processing and analyzing rutting data.
FIG. 5 is a sectional view illustrating an example showing characteristics of a rut formed in a ground surface.
FIG. 6A depicts a land portion containing a field boundary and a pivot irrigation system.
FIG. 6B shows a land portion with a linear field boundary containing a linear irrigation system.
FIG. 7 is a side view illustrating an example of a work machine operating on a ground surface.
FIG. 8 is a flowchart of an example of a technique for rut detection and mitigation.

### DETAILED DESCRIPTION

Current computer-implemented solutions for rut detection and mitigation in agricultural settings often rely on limited data sources and simplistic models. These systems typically struggle to accurately identify and characterize the full range of terrain anomalies that can occur in diverse field conditions. For example, existing technologies may fail to distinguish between temporary surface irregularities and more persistent ruts that may require mitigation (e.g., mitigation by a work machine to avoid damage or operational disruption or structural mitigation to eliminate the rut). Additionally, the dynamic nature of agricultural environments, where soil conditions can change rapidly due to weather events or irrigation, further complicates the task of maintaining up-to-date and accurate terrain maps for automated navigation and implement control.

The limitations of current rut detection and mitigation technologies can lead to suboptimal performance of agricultural work machines. Inaccurate or outdated terrain information may cause automated systems to make poor decisions regarding speed, steering, and implement positioning when encountering ruts or other anomalies. This can result in reduced operational efficiency, increased wear on equipment, and potential damage to crops. Furthermore, the inability to effectively plan for and mitigate terrain irregularities can lead to long-term degradation of field conditions, impacting soil health and crop yields over time.

Another challenge in this domain is the integration and processing of diverse data sources to create a comprehensive understanding of field conditions. While individual sensors and data collection methods exist, there is a lack of robust systems that can effectively combine and analyze data from multiple sources such as onboard sensors, aerial imagery, weather data, and historical field information. This limitation hinders the development of more sophisticated and accurate rut detection and mitigation strategies (e.g., mitigation operations) that could adapt to the complex and ever-changing conditions encountered in modern agricultural operations.

Implementations according to this disclosure address problems such as these by determining rut characteristics associated with a rut in a ground surface at a worksite based on rutting data, acquiring location data indicative of a current location of a work machine relative to the rut, and generating control data to cause an actuator of the work machine to perform a mitigation operation based on the rut characteristics and the work machine's location. As used herein, the term "rutting data" includes, but is not limited to, information from which rut characteristics can be derived. Rut characteristics are characteristics of a rut. Rut characteristics may be indicative of any number of aspects of a rut such as, for example, a presence of a rut in a field or zone, a location of a rut, a depth of a rut, a width of a rut, or a length of a rut, among other examples. Rutting data may include, for example, precipitation data, soil data, tillage history data, soil compaction data, shadow data, work machine data, user input data, or irrigation system data, among other examples.

Some implementations improve upon existing terrain anomaly detection and mitigation technologies by integrating diverse data sources and employing focused computational techniques to create a more comprehensive and accurate understanding of field conditions. This technical solution may involve real-time data processing, machine learning algorithms, and dynamic control of agricultural machinery. The work machine may be a tractor, harvester, sprayer, or any other vehicle equipped with sensors and actuators capable of detecting and responding to terrain anomalies.

The rut characteristics determined in some implementations may include rut geometry, shape, depth, ridge height, ridge width, depression width, or material displacement, among other examples. These characteristics are used to inform the mitigation operation, which may involve adjusting vehicle speed, steering, or implement height to navigate the rut safely and efficiently. Some implementations may include using an aerial vehicle for data collection, implementing any number or combination of different types of rut models (such as a machine learning component, a statistical model, or a deterministic model), or generating visual representations of rut information for display on a client computing device.

Some implementations include processing various types of irrigation system data further enhancing the versatility and effectiveness of determining rut characteristics. For pivot irrigation systems, some implementations can utilize data such as pivot center location, number of irrigation towers, and inter-tower distance. For linear irrigation systems, some implementations can process information about track starting locations, directional headings, and inter-track distances. In the case of boarder irrigation systems, some implementations can handle data related to boarder starting locations, spatial orientations, widths, and associated dike information. This comprehensive approach to data integration and processing represents a technical advancement over traditional solutions, enabling more precise and adaptive rut detection and mitigation strategies in diverse agricultural environments.

In some implementations, a system integrates diverse data sources to determine rut characteristics. Accordingly, an advantage of the integration of diverse data sources is a more comprehensive and accurate understanding of field conditions. Additionally, an advantage of the integration of diverse data sources is the ability to adapt to changing environmental factors that affect rut formation. Furthermore, an advantage of the integration of diverse data sources is improved decision-making for mitigation operations based on a holistic view of the worksite.

In some implementations, the system employs a rut model that includes machine learning components. A machine learning component may be or include any number of different machine learning models. Accordingly, an advantage of the rut model with machine learning components is the ability to improve detection accuracy over time as more data is collected. Additionally, an advantage of the rut model with machine learning components is the capability to identify complex patterns and relationships in rutting data that may not be apparent through traditional analysis methods. Moreover, an advantage of the rut model with machine learning components is its adaptability to different types of agricultural environments and equipment configurations.

In some implementations, the system predicts rut characteristics based on irrigation system data. Accordingly, an advantage of predicting rut characteristics based on irrigation system data is the ability to anticipate potential rut formations before they become problematic. Additionally, an advantage of this approach is its technical simplicity and cost-effectiveness, as it may utilize existing irrigation system information without requiring extensive additional sensors or equipment. Furthermore, an advantage of predicting rut characteristics based on irrigation system data is the potential for proactive field management, enabling farmers to plan operations and implement preventive measures to minimize rut formation.

In some implementations, the system generates control data to cause an actuator of the work machine to perform a mitigation operation. Accordingly, an advantage of the automated mitigation operation is increased operational efficiency by reducing the need for manual intervention. Additionally, an advantage of the automated mitigation operation is improved safety by allowing the work machine to respond autonomously, quickly, and appropriately to detected ruts. Furthermore, an advantage of the automated mitigation operation is the potential for more consistent and precise adjustments to work machine parameters such as speed, steering, and implement height when encountering ruts.

To describe some implementations in greater detail, reference is first made to examples of systems, machines, implements, hardware and software structures used to implement a system for rut detection and mitigation for work machines.

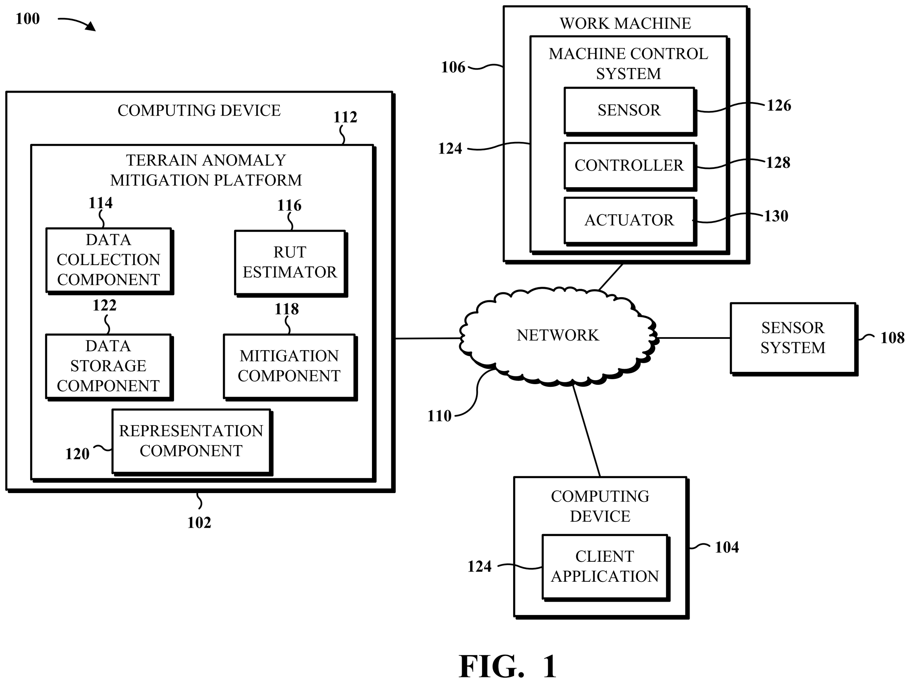

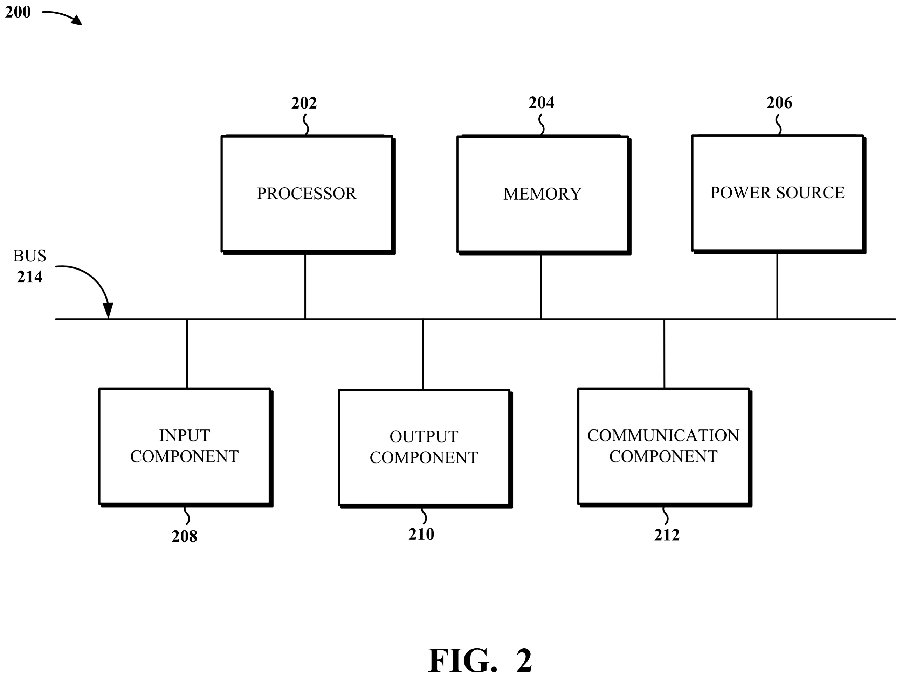

FIG. 1 is a block diagram of an example system 100 for rut detection and mitigation. The system 100 may include a computing device 102, a computing device 104, a work machine 106, and a sensor system 108, communicatively coupled via a network 110. One or more components of the system 100 may be implemented using various hardware environments, including distributed computing systems, cloud computing systems, or clustered computing systems. One or more components of the system 100 may be implemented using various software components deployed on one or more physical or virtual computing devices. In some implementations, for example, one of more components of the system 100 may be implemented using one or more computing devices such the computing device 200 of FIG. 2. In some implementations, two or more of the computing device 102, the computing device 104, the work machine 106, and the sensor system 108 may be implemented using the same physical computing device or virtual computing devices. For example, the computing device 102 and/or the sensor system 108 may be implemented on the work machine 106.

The computing device 102 may host a terrain anomaly mitigation platform 112, which may include several components: a data collection component 114, a rut estimator 116, a mitigation component 118, a representation component 120, and a data storage component 122. In some implementations, these components may be implemented as software modules, hardware modules, or a combination thereof. The terrain anomaly mitigation 112 may process various types of data related to field conditions and rut formation, analyze this data to detect and characterize ruts, and generate mitigation strategies. For example, the terrain anomaly mitigation platform 112 may be configured to detect or predict the presence and characteristic of a rut based on rutting data (including precipitation data, soil data, tillage history data, soil compaction data, shadow data, work machine data, and/or user input data) and generate control data (including control signals) to cause an actuator of a work machine to perform an automated mitigation operation. Furthermore, the terrain anomaly mitigation platform 112 may be configured to detect or predict the presence and characteristics of a rut based on irrigation system data (e.g., pivot center location, number of irrigation towers, and inter-tower distance, track starting location, directional heading, and inter-track distance, or boarder starting location, spatial orientation, width, and dike information) and generate control data to cause an actuator of a work machine to perform an automated mitigation operation.

The data collection component 114, the rut estimator 116, the mitigation component 118, the representation component 120, and the data storage component 122 may have different and/or combined functionalities. Furthermore, two or more of the data collection component 114, the rut estimator 116, the mitigation component 118, the representation component 120, and the data storage component 122 may be combined. In some implementations, one or more of the data collection component 114, the rut estimator 116, the mitigation component 118, the representation component 120, and the data storage component 122 may include or be included in a computing device or system having some or all of the components referenced in FIG. 2. For example, the terrain anomaly mitigation platform 112 may include or be included in one or more computing devices or systems, such as the computing device 200 of FIG. 2.

In some implementations, the terrain anomaly mitigation platform 112 may include one or more other components not shown in FIG. 1 that may be useful in implementing some implementations of the system for rut detection and mitigation. In some implementations, the terrain anomaly mitigation platform 112 may be configured for rut detection and mitigation as well as other terrain anomaly mitigation operations in an agricultural setting. For example, the terrain anomaly mitigation platform 112 may identify and address soil compaction issues, erosion patterns, or areas of poor drainage. In some implementations, the terrain anomaly mitigation platform 112 may detect and plan mitigation strategies for obstacles such as large rocks, fallen trees, or unexpected debris in the field. The terrain anomaly mitigation platform 112 may be capable of identifying and addressing uneven crop growth patterns or areas of weed infestation that could impact field traversal. The terrain anomaly mitigation platform 112 may be configured to detect and mitigate issues related to field boundaries, such as encroaching vegetation or deteriorating fences. In some cases, the terrain anomaly mitigation platform 112 may identify and plan for the presence of wildlife paths or burrows that could affect field operations. These additional capabilities may allow the terrain anomaly mitigation platform 112 to provide a more comprehensive approach to maintaining optimal field conditions for agricultural operations.

The data collection component 114 may gather and preprocess various types of rutting data. The data collection component 114 may include, be included in, or otherwise interface with multiple data sources, including precipitation sensors, soil moisture sensors, tillage equipment logs, or aerial imagery systems, among other examples. In some implementations, the data collection component 114 may receive real-time data from sensors mounted on the work machine 106. The data collection component 114 may include capabilities for data cleaning, normalization, and fusion of heterogeneous data types.

Rutting data may encompass a wide range of information related to the formation, characteristics, and impact of ruts in agricultural fields. This data may be derived from various sources and can provide valuable insights into the conditions that contribute to rut formation, as well as the physical properties of existing ruts. In some implementations, rutting data may include any type of data that may be used to detect a rut in an agricultural field or other terrain. This may encompass a wide variety of data types and sources, including but not limited to sensor readings, historical records, user observations, and machine-generated data. For example, rutting data may include topographical measurements, soil moisture content, vegetation density, equipment traffic patterns, or spectral imagery analysis. In some cases, rutting data may be derived from direct measurements of ground surface irregularities, while in other instances the rutting data may be inferred from indirect indicators such as changes in crop health or water pooling patterns. The terrain anomaly mitigation platform 112 may be capable of processing and analyzing diverse forms of rutting data to identify potential rut locations, characterize rut properties, and predict future rut formation based on various environmental and operational factors.

In some implementations, rutting data may include precipitation data, which can indicate the amount and timing of rainfall or irrigation that may affect soil moisture levels and susceptibility to rutting. Precipitation data may be obtained from various sources to provide comprehensive information about rainfall patterns and soil moisture conditions. In some implementations, the terrain anomaly mitigation platform 112 may utilize data from weather radio detection and ranging (radar) systems, such as Doppler radar, which can provide real-time estimates of precipitation intensity and distribution over large areas. On-site rain gauges may be deployed across the field or worksite to collect localized precipitation measurements, offering precise data for specific locations. In some implementations, the terrain anomaly mitigation platform 112 may incorporate data from weather satellites, which can provide broader regional precipitation patterns and cloud cover information. In some cases, the data collection component 114 may access data from nearby weather stations or meteorological networks to supplement on-site measurements. The terrain anomaly mitigation platform 112 may also utilize soil moisture sensors distributed throughout the field to correlate precipitation data with actual soil conditions. In some implementations, by integrating diverse sources of precipitation data, the terrain anomaly mitigation platform 112 may develop a more accurate understanding of how rainfall and irrigation patterns contribute to rut formation and soil conditions across the worksite.

Rutting data may also include soil data, which may provide information about soil type, texture, and composition that can influence rut formation and persistence. In some implementations, soil data may be obtained from various sources to provide comprehensive information about soil characteristics that influence rut formation and persistence. Soil type maps, which may be derived from geological surveys or precision agriculture mapping techniques, may include detailed information about soil composition across different areas of a field. In some cases, the terrain anomaly mitigation platform 112 may incorporate data from soil sampling and laboratory analysis, which can provide precise information about soil texture, organic matter content, and mineral composition. The terrain anomaly mitigation platform 112 may utilize data from soil penetrometers, which measure soil compaction and resistance at different depths. In some implementations, electromagnetic soil mapping techniques may be employed to create high-resolution maps of soil electrical conductivity, which can indicate variations in soil texture, moisture content, or salinity. The terrain anomaly mitigation platform 112 may incorporate data from multispectral or hyperspectral imaging sensors, which can provide information about soil surface properties and organic matter content. In some cases, historical tillage and crop rotation data may be used to infer changes in soil structure and composition over time. In some implementations, by integrating diverse sources of soil data, the terrain anomaly mitigation platform 112 may develop a more comprehensive understanding of how soil properties contribute to rut formation and persistence across different areas of the field.

In some cases, rutting data may incorporate tillage history data, which can offer insights into past field operations that may have affected soil structure and compaction. Soil compaction data may be directly included as part of the rutting data, providing measurements or estimates of soil density and resistance to penetration. Tillage history data may be obtained from various sources to provide a comprehensive understanding of past field operations and their potential impact on soil structure and rut formation. In some implementations, the data collection component 114 may access farm management software or digital record-keeping systems that store detailed information about tillage activities, including dates of operations, types of equipment used, and tillage depths. The terrain anomaly mitigation platform 112 may incorporate data on tillage direction, which can influence water flow patterns and potential rut formation. In some cases, information about no-till practices or conservation tillage methods may be included, as these approaches can affect soil structure and susceptibility to rutting differently than conventional tillage. The terrain anomaly mitigation platform 112 may also consider data on cover crop usage, including species planted, planting dates, and termination methods, as cover crops can impact soil structure, organic matter content, and water infiltration rates. In some implementations, the terrain anomaly mitigation platform 112 may utilize historical satellite or aerial imagery to infer tillage practices based on visible field patterns or residue cover. The terrain anomaly mitigation platform 112 may incorporate data from precision agriculture tools, such as yield monitors or soil sensors, which can provide insights into the long-term effects of different tillage practices on soil conditions and crop performance.

In some implementations, rutting data may include shadow data. Shadow data, derived from terrestrial, aerial, or satellite imagery, may be used to detect ruts based on the shadows they cast under certain lighting conditions. Shadow data may be derived from various sources and influenced by multiple factors to enhance rut detection capabilities. In some implementations, the terrain anomaly mitigation platform 112 may utilize high-resolution aerial or satellite imagery captured under specific lighting conditions to identify shadows cast by ruts or other terrain anomalies. The terrain anomaly mitigation platform 112 may incorporate data on sun angle and position, which can be calculated based on the time of day, date, and geographic location of the field. In some cases, the data collection component 114 may access sky cover information from weather services or on-site sensors to account for cloud conditions that may affect shadow formation. The terrain anomaly mitigation platform 112 may also use data from light detection and ranging (LiDAR) sensors mounted on drones or ground vehicles to create detailed 3D models of the field surface, which can be used to simulate shadow patterns under various lighting scenarios. In some implementations, the terrain anomaly mitigation platform 112 may employ multi-temporal imagery analysis, comparing shadow patterns across different times of day or seasons to improve rut detection accuracy. The terrain anomaly mitigation platform 112 may consider the spectral characteristics of shadows in multispectral or hyperspectral imagery, as shadows can have distinct spectral signatures that differ from surrounding non-shadowed areas.

In some implementations, rutting data may include work machine data. Work machine data may be included to understand the mechanical factors contributing to rut formation and/or to determine parameters for mitigation operations. Work machine data may encompass a wide range of information related to the physical characteristics and/or operational parameters of agricultural equipment. In some implementations, this data may include details about the machine's configuration, such as the number of axles, which can affect weight distribution and ground pressure. The number of tires or tracks, as well as their respective widths and pressures, may be recorded as these factors can influence the machine's impact on soil compaction and rut formation. In some cases, the terrain anomaly mitigation platform 112 may incorporate data on the machine's total weight, including any attached implements or cargo, as well as the distribution of this weight across different axles or contact points. The terrain anomaly mitigation platform 112 may also consider dynamic factors such as the machine's speed, acceleration patterns, and turning radius during field operations. In some implementations, data on the machine's power output, traction control systems, and suspension characteristics may be included to provide a more comprehensive understanding of how the equipment interacts with the soil surface. In some implementations, a ground height sensor may be used to determine a distance between a ground surface and a portion of the work machine 106, where the determined distance may be included in the work machine data. The terrain anomaly mitigation platform 112 may utilize this work machine data in conjunction with soil and environmental data to predict potential rut formation and optimize equipment settings for minimal soil disturbance.

In some implementations, irrigation system data may be obtained from various sources to provide comprehensive information about irrigation patterns and their potential impact on rut formation. The data collection component 114 may access data directly from irrigation system controllers, which may store information about irrigation schedules, water flow rates, and system configurations. In some cases, the terrain anomaly mitigation platform 112 may incorporate data from soil moisture sensors distributed throughout the field, which can provide real-time information about soil water content and help correlate irrigation activities with soil conditions. The terrain anomaly mitigation platform 112 may utilize aerial or satellite imagery to identify irrigation patterns and detect signs of over-irrigation or uneven water distribution. In some implementations, the data collection component 114 may access historical irrigation records from farm management software or databases, which can provide insights into long-term irrigation practices and their effects on field conditions. The terrain anomaly mitigation platform 112 may incorporate data from weather stations or evapotranspiration models to estimate crop water needs and optimize irrigation schedules. In some cases, the terrain anomaly mitigation platform 112 may use data from flow meters or pressure sensors installed in the irrigation system to monitor water usage and system performance.

In some implementations, irrigation system data associated with a pivot irrigation system may include, for example, a pivot center location, a number of irrigation towers, and an inter-tower distance. Irrigation system data associated with linear irrigation systems may include, for example, track starting locations, directional headings, and inter-track distances. For border irrigation systems, data related to border starting locations, spatial orientations, widths, and associated dike information may be included in the rutting data set. In some implementations, irrigation system data may be provided as user input and/or retrieved by the data collection component 114 from a database. In some implementations, irrigation system data may be extracted from images (e.g., obtained from aerial sensors). Irrigation system data may include water irrigation rates, directions, and/or schedules. In some implementations, by integrating diverse sources of irrigation system data, the terrain anomaly mitigation platform 112 may develop a more accurate understanding of how irrigation practices contribute to rut formation and soil conditions across the worksite.

User input data may also be part of rutting data, allowing for manual observations or historical knowledge to be incorporated. User input data may encompass a variety of information types that can be manually entered or provided by operators, field managers, or other personnel familiar with a work site. In some implementations, user input data may include observations of visible ruts or terrain irregularities, noted during field inspections or equipment operations. Users may input information about the location, size, and severity of observed ruts. In some implementations, users may use mobile devices equipped with Global Positioning System (GPS) capabilities for precise geolocation of the ruts. The terrain anomaly mitigation platform 112 may enable users to input historical knowledge about persistent problem areas, such as locations prone to waterlogging or areas with known subsurface drainage issues that may contribute to rut formation. In some cases, users may provide information about recent field activities not captured by automated systems, such as temporary equipment traffic patterns during maintenance operations. The terrain anomaly mitigation platform 112 may also accept user input regarding planned field operations, allowing for proactive rut mitigation strategies. User observations about crop health or yield variations in specific field areas may be incorporated, as these can sometimes indicate underlying soil structure issues related to rutting. In some implementations, the terrain anomaly mitigation platform 112 may provide an interface for users to validate or refine automatically detected rut information, leveraging human expertise to improve the system's accuracy over time.

Geolocation data may be included in the rutting data, providing spatial information about the location and distribution of ruts across the worksite. This data may be obtained through a geolocation device configured to implement one or more positioning technologies, such as GPS, Real-Time Kinematic (RTK) GPS, or other satellite-based navigation systems. In some implementations, the terrain anomaly mitigation platform 112 may incorporate geolocation data from work machines equipped with GPS receivers, allowing for accurate tracking of equipment movements and the locations where ruts are encountered or formed. The terrain anomaly mitigation platform 112 may also utilize geolocation data from fixed reference stations or base stations to improve positioning accuracy through differential correction techniques.

In some cases, geolocation data may be paired with other sensor data to create georeferenced datasets that provide a comprehensive view of field conditions. For example, soil moisture readings from in-field sensors may be tagged with precise location coordinates, allowing for the creation of high-resolution soil moisture maps. Similarly, data from LiDAR sensors or multispectral cameras mounted on drones or ground vehicles may be combined with geolocation information to generate detailed 3D terrain models or vegetation health maps. The terrain anomaly mitigation platform 112 may use this paired data to analyze spatial patterns in rut formation, correlating factors such as soil type, topography, and equipment traffic patterns with the occurrence and severity of ruts. In some implementations, the system may incorporate geolocation data from precision agriculture tools, such as yield monitors or variable-rate application systems, to study the relationship between rut formation and crop productivity across different areas of the field. In some examples, the data is also tagged with date and time to enable time-series data analysis.

The data collection component 114 may perform fusion of heterogeneous data types by integrating information from multiple sources and formats into a unified dataset. This process may involve aligning temporal and spatial data from different sensors, normalizing measurements to common scales, and combining structured and unstructured data. For example, the data collection component 114 may synchronize high-frequency sensor readings from the work machine with lower-frequency satellite imagery data to properly time-stamp and geo-reference all such information.

In some implementations, the data collection component 114 may employ algorithms to handle the complexities of data fusion. These may include Kalman filters for merging time-series data, Bayesian inference techniques for combining probabilistic information, or machine learning approaches such as neural networks for identifying patterns across diverse data sources. The data collection component 114 may implement data quality assessment procedures to weight the reliability of different sources, potentially adjusting the influence of each data type based on factors such as sensor accuracy, data freshness, or environmental conditions. This fusion process may result in a more comprehensive and accurate representation of field conditions, enabling the terrain anomaly mitigation platform 112 to make more informed predictions about rut characteristics and locations.

The rut estimator 116 may process the collected data to determine rut characteristics. Rut characteristics may include any number of various physical properties and attributes of ruts in ground surfaces. Rut characteristics may include rut depth below the ground surface or relative depth, which indicates how far the rut depression extends below the normal ground level. The rut ridge height above the ground surface may be included in the rut characteristics and may be considered as an indicator of soil displacement or accumulation along the edges of the rut. Rut width may also be a determined rut characteristic, potentially including both the depression width below ground surface ("rut depression width") and the rut ridge width above the surface on one or more sides of the depression. In some implementations, rut material displacement (another rut characteristic) may be estimated, providing information on the volume or mass of soil moved during (as a result of) rut formation. The rut geometry or rut shape may be determined, as ruts can have different profiles depending on the equipment and conditions that created them. The rut estimator116 may determine the location and orientation of ruts as other rut characteristics. In some implementations, the stability of the rut may be assessed, as some ruts may partially or completely fill in due to soil plasticity or other factors. In some cases, error estimates associated with determined rut characteristics may be included as part of the rut characteristics, providing information on the confidence level of the estimations.

The rut estimator 116 may employ various computational techniques, such as machine learning algorithms, statistical models, or physics-based simulations to estimate rut properties like depth, width, and shape. In some implementations, the rut estimator 116 may use a combination of these techniques, adapting its approach based on the available data and specific field conditions. The rut estimator 116 may include capabilities for uncertainty quantification, providing confidence intervals for its estimates.

The rut estimator 116 may employ a multi-stage approach to process collected data (obtaining prepared data therefrom) and determine rut characteristics. In some implementations, the rut estimator 116 may first preprocess the input data (i.e., the collected data) to handle missing values, eliminate outliers, normalize different data types, and align temporal and spatial information. This preprocessing stage may involve techniques such as interpolation for filling gaps in time-series data, geospatial registration to ensure all data sources are properly aligned, and feature scaling to bring different measurements into comparable ranges.

Following preprocessing, the rut estimator 116 may utilize a combination of machine learning models to analyze the prepared data. For example, a convolutional neural network (CNN) may be employed to extract features from satellite or aerial imagery, identifying potential rut patterns based on visual cues such as shadows, vegetation disruption, or soil discoloration. In parallel, a recurrent neural network (RNN) or long short-term memory (LSTM) network may process time-series data from soil moisture sensors, weather stations, or work machine telemetry to capture temporal patterns that may indicate rut formation or evolution over time. The outputs from these specialized models may then be combined using an ensemble algorithm, such as a random forest or gradient boosting machine, to generate initial estimates of rut characteristics.

In some cases, the rut estimator 116 may incorporate physics-based models to refine and validate the machine learning predictions. These models may simulate soil mechanics, taking into account factors such as soil type, moisture content, and applied loads from agricultural machinery or irrigation equipment. By comparing the outputs of the physics-based simulations with the machine learning predictions, the rut estimator 116 may adjust its estimates and provide more accurate assessments of rut depth, width, and shape. In some implementations, the rut estimator 116 may employ Bayesian inference techniques to update its predictions as new data becomes available, allowing for continuous refinement of rut characteristic estimates over time. This adaptive approach may enable the rut estimator 116 to improve its accuracy and reliability as it accumulates more data and learns from the specific conditions of each agricultural site.

In some implementations, rut characteristics may be determined based on irrigation system data. This approach may rely on deterministic calculations and predefined rules rather than (or in addition to) complex machine learning algorithms. For example, the rut estimator 116 may use the known dimensions and configuration of a center pivot irrigation system to directly estimate the location and size of potential ruts. In this approach, the rut estimator 116 may utilize basic geometric calculations based on the pivot center location, arm length, and number of towers to determine the circular paths that the irrigation system's wheels follow. The inter-tower distance may be used to estimate the width of the ruts, while the weight of the irrigation system and the number of passes over the same area may be used to approximate the depth of the ruts. For linear and/or boarder irrigation systems, the rut estimator 116 may use the track starting locations (or boarder starting locations), directional headings, and inter-track (or inter-dike) distances to plot the likely paths of rut formation. The frequency of irrigation cycles and the soil type data may be incorporated to refine these estimates, potentially adjusting the predicted rut depth based on how often the soil is subjected to the weight of the irrigation equipment and how susceptible the soil is to compaction.

The rut estimator 116 may incorporate mechanisms to account for and adapt to changing rut characteristics over time. In some implementations, the rut estimator 116 may employ a dynamic modeling approach that continuously updates its predictions based on new data inputs. This may involve using time-series analysis techniques to detect trends and patterns in rut formation and evolution. For example, the rut estimator 116 may track changes in rut depth, width, or shape over multiple growing seasons, accounting for factors such as weather patterns, crop rotation practices, and changes in field traffic patterns. By maintaining a historical record of rut characteristics and associated environmental conditions, the rut estimator 116 may develop more nuanced predictions that reflect the dynamic nature of agricultural environments.

In some cases, the rut estimator 116 may utilize adaptive learning algorithms that can adjust their parameters in response to observed changes in rut characteristics. This may be particularly useful in scenarios where ruts exhibit different behavior than initially predicted, such as when soil conditions change unexpectedly or when new equipment is introduced to the field. The rut estimator 116 may incorporate feedback mechanisms that enable it to learn from discrepancies between predicted and observed rut characteristics. For instance, if a rut is found to be shallower or wider than initially estimated, the rut estimator 116 may adjust its internal models to account for these observations in future predictions. This adaptive approach may enable the rut estimator 116 to improve its accuracy over time and to better handle the variability inherent in agricultural environments, where factors such as soil plasticity, weather events, and changing management practices can significantly impact rut formation and persistence.

The mitigation component 118 may generate control strategies based on the rut characteristics and the current location of the work machine 106. The control strategies may also be based on characteristics of the work machine 106. In some implementations, the mitigation component 118 may generate control data to facilitate actions such as speed adjustments, steering modifications, or implement height changes to navigate detected ruts. For example, when a work machine is approaching a rut, the mitigation component 118 may generate control data to reduce the speed of the work machine 106, adjust the steering to minimize the impact of crossing the rut, or raise an implement to avoid contact with the rut edges. The mitigation component 118 may consider the weight distribution of the work machine 106 and adjust the machine's configuration to optimize traction and minimize soil compaction when traversing ruts.

In some cases, the mitigation component 118 may plan longer-term strategies for rut repair or prevention. This may involve generating recommendations for field management practices, such as adjusting irrigation schedules, modifying tillage practices, or implementing controlled traffic farming techniques to minimize rut formation. The mitigation component 118 may suggest the use of specialized equipment for rut repair, such as skid loaders, land planes, or rut fillers, and provide guidance on the optimal timing and method for a rut elimination operation. In some implementations, the mitigation component 118 may analyze historical rut data and field conditions to identify areas prone to rutting and recommend preventive measures, such as improving drainage or altering crop rotation patterns in those areas.

The mitigation component 118 may incorporate reinforcement learning techniques to optimize mitigation strategies over time based on observed outcomes. This adaptive approach may allow the terrain anomaly mitigation platform 112 to continuously improve its decision-making process by learning from the effectiveness of previous mitigation actions. For instance, the mitigation component 118 may track the success rate of different speed adjustment strategies in various rut scenarios and refine its control recommendations and/or control operations accordingly. In some implementations, the mitigation component 118 may consider factors such as fuel efficiency, time constraints, or potential crop damage when generating mitigation strategies, aiming to balance effective rut navigation with overall operational efficiency. The mitigation component 118 may also adapt its strategies based on different crop types, growth stages, or soil moisture conditions, facilitating guiding mitigation actions that are appropriate for the specific field context.

The representation component 120 may generate visual or other representations of rut information for display on the computing device 104. This may include data tables, data graphs, 2D or 3D maps of detected ruts, graphical representations of rut characteristics, or augmented reality overlays for machine operators. In some implementations, the representation component 120 may generate reports or data visualizations for field management purposes. The representation component 120 may include capabilities for interactive data exploration or real-time updating of displayed information.

The data storage component 122 may manage the storage and retrieval of various data types used by the terrain anomaly mitigation platform 112. This may include raw sensor data, processed rut information, historical field data, and system configuration parameters. In some implementations, the data storage component 122 may utilize distributed storage systems or cloud-based storage solutions for scalability and reliability. The data storage component 122 may incorporate advanced data compression techniques or blockchain technology for secure and tamper-evident data storage.

The computing device 104 may be a mobile device, tablet, laptop, or desktop computer used by operators or field managers to interact with the terrain anomaly mitigation platform 112. In some implementations, the computing device 104 may run a dedicated application for displaying rut information and controlling mitigation operations. The computing device 104 may be used to input manual observations or configuration parameters into the system. The computing device 104 may include wearable devices or heads-up displays for hands-free operation in the field.

The work machine 106 may represent a vehicle such as, for example, a construction vehicle or an agricultural vehicle or implement that will be navigating the field and potentially encountering ruts. This may include tractors, harvesters, sprayers, loaders, or other types of equipment. The work machine 106 may be equipped with a machine control system 124, which may include a sensor 126, a controller 128, and an actuator 130. In some implementations, the work machine 106 may be autonomous or semi-autonomous, capable of executing mitigation strategies with minimal human intervention. The work machine 106 may include modular designs that allow for integration of additional sensors or actuators as needed.

The sensor 126 on the work machine 106 may include various types of sensors for detecting terrain conditions and machine status. This could include cameras, LiDAR, geolocation devices, accelerometers, or specialized soil sensors, among other examples. In some implementations, the sensor 126 may be a multi-modal sensor system, fusing data from multiple sensor types for detection capabilities. The sensor 126 may include advanced signal processing capabilities or edge computing modules for preliminary data analysis before transmission to the main system.

The controller 128 of the machine control system 124 may execute the control data generated by the mitigation component 118. This may involve interpreting control signals, managing real-time adjustments, and facilitating safe operation of the work machine 106. In some implementations, the controller 128 may have some level of local decision-making capability to handle rapid responses to detected ruts. The controller 128 may incorporate redundant systems or fail-safe mechanisms to ensure reliable operation in challenging field conditions.

The actuator 130 may represent the various mechanical systems of the work machine 106 that can be controlled to execute mitigation strategies. This may include steering systems, speed control mechanisms, implement height adjusters, or specialized rut-filling attachments. In some implementations, the actuator 130 may include high-precision electro-hydraulic systems for fine control of machine movements. The actuator 130 may incorporate adaptive control algorithms to optimize performance across different soil types and rut characteristics.

The sensor system 108 may represent additional sensors that may be deployed in the field or on other vehicles to supplement the data collected by the work machine 106. This could include stationary weather stations, internet-of-things (IoT) sensor platforms deployed at the worksite, mobile sensor platforms, or drone-based sensing systems. In some implementations, the sensor system 108 may form a wireless sensor network, providing coverage of the entire field. The sensor system 108 may include edge computing capabilities for distributed data processing or mesh networking technologies for communication in areas with poor connectivity.

The sensor system 108 may be associated with one or more aerial vehicles to enhance data collection capabilities across the worksite. These aerial vehicles may include unmanned aerial vehicles (UAVs) such as quadcopters, fixed-wing drones, or larger remotely piloted aircraft. In some implementations, the aerial vehicles may be equipped with various sensors to capture data from different perspectives and altitudes. For example, a UAV may carry a high-resolution camera to capture detailed imagery of the field, allowing for visual identification of ruts, crop damage, or other terrain anomalies. LiDAR sensors mounted on aerial vehicles may be used to generate precise 3D maps of the field surface, potentially detecting subtle changes in elevation that could indicate rut formation. In some cases, multispectral or hyperspectral cameras on aerial platforms may collect data on crop health, soil moisture levels, or vegetation density, which may correlate with areas prone to rutting. Thermal imaging sensors on UAVs may detect variations in soil temperature or moisture content, potentially identifying areas where ruts are more likely to form or persist. The aerial vehicles may follow pre-programmed flight paths to systematically survey the entire field, or they may be directed to specific areas of interest based on data from other sources. The data collected by these aerial platforms may be transmitted in real-time to the terrain anomaly mitigation platform 112 for immediate processing, or stored for later analysis and integration with other data sources.

The network 110 may facilitate communication between the various components of the system 100. This may include both wired and wireless communication technologies, potentially utilizing cellular networks, satellite communications, or dedicated field area networks. In some implementations, the network 110 may employ software-defined networking techniques for data routing. The network 110 may incorporate encryption and authentication mechanisms to ensure the security and integrity of transmitted data in agricultural environments.

FIG. 2 is a block diagram of an example computing device 200. The computing device 200 may be, be similar to, include, or be included in, an apparatus for performing one or more methods, processes, algorithms, operations, tasks, and/or techniques, as described herein. The computing device 200 may be, be similar to, include, or be included in, a work machine, a server, a sensor system, or a communication device, among other examples. For example, the computing device 200 may be used to implement one or more components of the system 100 shown in FIG. 1. The computing device 200 includes a processor 202, memory 204, power source 206, input component 208, output component 210, and communication component 212, all communicatively coupled via a bus 214.

The processor 202 may be configured to execute instructions and process data for the computing device 200. The processor 202 may be a central processing unit, such as a microprocessor, and may include single or multiple processors having single or multiple processing cores. The processor 202 may include another type of device, or multiple devices, configured for manipulating or processing information. For example, the processor 202 may include multiple processors interconnected in one or more manners, including hardwired or networked. The operations of the processor 202 may be distributed across multiple devices or units that can be coupled directly or across a local area or other suitable type of network. The processor 202 may include a cache, or cache memory, for local storage of operating data or instructions. In some implementations, the processor 202 may incorporate field-programmable gate arrays (FPGAs) or application-specific integrated circuits (ASICs) to optimize performance for specific rut detection and mitigation algorithms.

The memory 204 may be configured to store data and instructions for the computing device 200. The memory 204 includes one or more memory components, which may each be volatile memory or non-volatile memory. The memory 204 may include non-transitory memory. The volatile memory can be random access memory (RAM) (e.g., a DRAM module, such as DDR SDRAM). The non-volatile memory of the memory 204 may be a disk drive, a solid state drive, flash memory, or phase-change memory. In some implementations, the memory 204 may be distributed across multiple devices. For example, the memory 204 may include network-based memory or memory in multiple clients or servers performing the operations of those multiple devices.

The memory 204 may include data for access by the processor 202. For example, the memory 204 may include executable instructions, application data, or an operating system, among other examples. The executable instructions may include one or more application programs, which may be loaded or copied, in whole or in part, from non-volatile memory to volatile memory to be executed by the processor 202. For example, the executable instructions may include instructions for performing techniques described in this disclosure. In some implementations, the application data may include functional programs, such as a computational programs, analytical programs, database programs, and so on. The operating system may be, for example, Microsoft Windows^{®}, Mac OS X^{®}, or Linux^{®}; an operating system for a mobile device, such as a smartphone or tablet device; or an operating system for a non-mobile device, such as a mainframe computer.

The power source 206 provides power to the computing device 200. For example, the power source 206 may be an interface to an external power distribution system. In an example, the power source 206 may be a battery, such as where the computing device 200 is a mobile device or is otherwise configured to operate independently of an external power distribution system. In some implementations, the computing device 200 may include or otherwise use multiple power sources. In some such implementations, the power source 206 can be a backup battery.

The input component 208 and/or the output component 210 may include one or more input interfaces and/or output interfaces configured for facilitating communication between the computing device 200 and one or more peripheral devices such as, for example, one or more sensors, detectors, displays, input devices, or other devices configured for facilitating interaction with the computing device 200 or the environment around the computing device 200. An input device may, for example, include a positional input device, such as a microphone, mouse, touchpad, touchscreen, or the like; a keyboard; or another suitable human or machine interface device. In some implementations, an input device may include various sensors, such as cameras, LiDAR sensors, GPS receivers, or soil moisture sensors. An output device may, for example, include a speaker, a haptic component, a display, such as a liquid crystal display, a cathode-ray tube, a light emitting diode display, or other suitable display. In some implementations, the output component 210 may incorporate augmented reality (AR) or virtual reality (VR) interfaces. In some implementations, the peripherals devices may include a geolocation component, such as a GPS device. In some examples, the peripheral devices may include a temperature sensor for measuring temperatures of components of the computing device 200, such as the processor 202.

The communication component 212 may be configured to enable data exchange between the computing device 200 and other devices or systems. The communication component 212 may include an interface for facilitating a connection or link to a network (e.g., the network 110 shown in FIG. 1). The communication component 212 may include a wired network interface or a wireless network interface. The computing device 200 may communicate with other devices via the communication component 212 using one or more network protocols, such as using Ethernet, TCP, IP, power line communication, an IEEE 802.X protocol (e.g., Wi-Fi, Bluetooth, or ZigBee), infrared, visible light, general packet radio service (GPRS), global system for mobile communications (GSM), code-division multiple access (CDMA), Z-Wave, a cellular communication protocol, another protocol, or a combination thereof.

The communication component 212 may include a transceiver, which may include a transmitter or a receiver. In some configurations, one or a combination of antenna(s), modem(s), multiple input multiple output (MIMO) detectors, receive processors, transmit processors, and/or the transmit MIMO processors may be included in the transceiver. The transceiver may be under control of or used by one or more processors, and in some aspects in conjunction with processor-readable code stored in the memory, to perform aspects of the methods, processes, techniques, and/or operations described herein.

For simplicity, this disclosure may use statements such as "machine X performs an action Y." These statements should be understood to mean that a computing device (e.g., a controller) within machine X performs the action Y or executes instructions to cause machine X to perform the action Y. A software application, which is executable by the computing device and may be included in or work in conjunction with machine X, can also perform action Y or cause machine X to perform action Y. The computing device may be the computing device 200.

An apparatus, computing device (e.g., the computing device 200), one or more components of a computing device, or a system, among other examples, described herein may include one or more chips, system-on-chips (SoCs), chipsets, packages, and/or devices that individually or collectively constitute or comprise a processing system. A processing system may include processor (or "processing") circuitry in the form of one or multiple processors, microprocessors, processing units (such as central processing units (CPUs), graphics processing units (GPUs), neural processing units (NPUs) and/or digital signal processors (DSPs)), processing blocks, application-specific integrated circuits (ASIC), programmable logic devices (PLDs) (such as field programmable gate arrays (FPGAs)), or other discrete gate or transistor logic or circuitry (all of which may be generally referred to herein individually as "processors" or collectively as "processor" or "processor circuitry"). One or more of the processors may be individually or collectively configurable or configured to perform various functions or operations described herein. A group of processors collectively configurable or configured to perform a set of functions may include a first processor configurable or configured to perform a first function of the set and a second processor configurable or configured to perform a second function of the set, or may include the group of processors all being configured or configurable to perform the set of functions.

The processing system may further include memory in the form of one or more memory devices, memory blocks, memory elements or other discrete gate or transistor logic or circuitry, each of which may include tangible storage media such as RAM or read-only memory (ROM), or combinations thereof (all of which may be generally referred to herein individually as "memories" or collectively as "memory" or "memory circuitry"). One or more of the memories may be coupled (for example, operatively coupled, communicatively coupled, electronically coupled, or electrically coupled) with one or more of the processors and may individually or collectively store processor-executable code (such as software) that, when executed by one or more of the processors, may configure one or more of the processors to perform various functions or operations described herein. Additionally or alternatively, in some examples, one or more of the processors may be preconfigured to perform various functions or operations described herein without requiring configuration by software.

The terms "processor," "controller," or "controller/processor" may refer to one or more controllers and/or one or more processors. For example, reference to "a/the processor," "a/the controller/processor," or the like (in the singular) should be understood to refer to any one or more of the processors described in connection with FIG. 2, such as a single processor or a combination of multiple different processors. Reference to "one or more processors" should be understood to refer to any one or more of the processors described in connection with FIG. 2.

In some aspects, a single processor may perform all of the operations described as being performed by the one or more processors. In some aspects, a first set of (one or more) processors of the one or more processors may perform a first operation described as being performed by the one or more processors, and a second set of (one or more) processors of the one or more processors may perform a second operation described as being performed by the one or more processors. The first set of processors and the second set of processors may be the same set of processors or may be different sets of processors. Reference to "one or more memories" should be understood to refer to any one or more memories of a corresponding device, such as the memory described in connection with FIG. 2. For example, operations described as being performed by one or more memories can be performed by the same subset of the one or more memories or different subsets of the one or more memories.

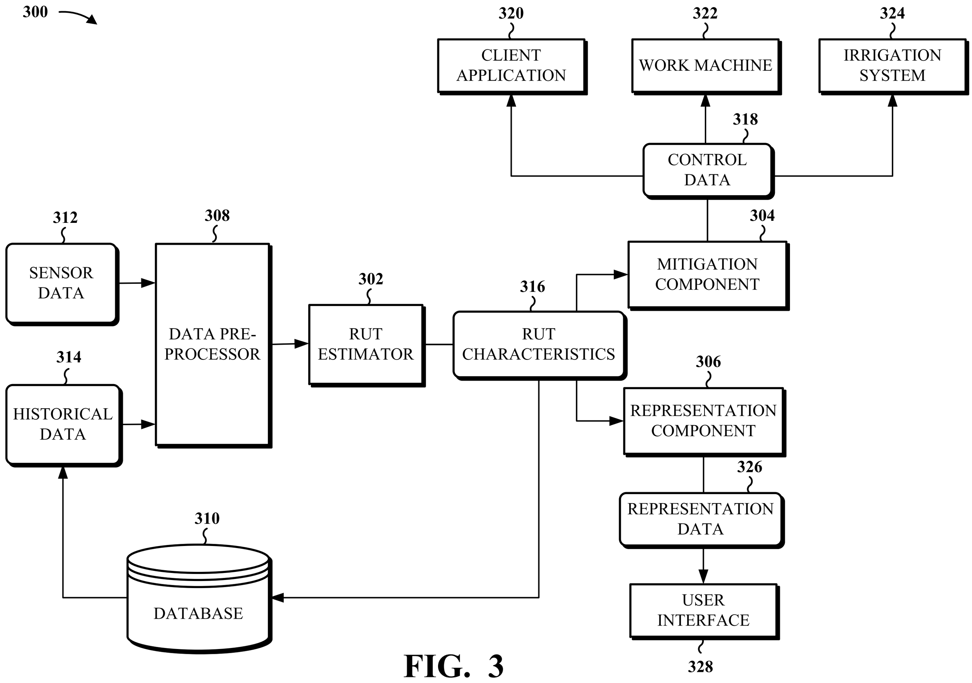

FIG. 3 is a schematic block diagram illustrating an example 300 associated with rut detection and mitigation. The example 300 illustrates data flow among components of a system such as, for example, the system 100 shown in FIG. 1. As shown in FIG. 3, the example 300 includes a rut estimator 302, a mitigation component 304, a representation component 306, a data pre-processor 308, and a database 310. The rut estimator 302, the mitigation component 304, the representation component 306, the data pre-processor 308, and the database 310, may be, be similar to, include, or be included in, respectively, the rut estimator 116, the mitigation component 118, the representation component 120, and the data storage component 122 shown in FIG. 1.

As shown, the data pre-processor 308 may receive input (e.g., rutting data) in the form of sensor data 312 and historical data 314. In some implementations, the sensor data 312 may include real-time information collected from various sensors deployed in the field or mounted on agricultural equipment. For example, the sensor data 312 may comprise readings from soil moisture sensors, accelerometers on work machines, or imagery from drone-mounted cameras. In some implementations, the sensor data 312 may include data from weather stations, GPS devices, or specialized rut detection sensors. The historical data 314 may be retrieved from the database 310, which may store long-term records of field conditions, past rut occurrences, or equipment usage patterns. In some implementations, the database 310 may be a distributed database system, allowing for scalable storage and rapid retrieval of large datasets. In some implementations, the database 310 may utilize blockchain technology to ensure the integrity and traceability of historical field data.

The data pre-processor 308 may be configured to clean, normalize, and integrate the input data from various sources. In some implementations, the data pre-processor 308 may employ techniques such as outlier detection, missing value imputation, or feature scaling to prepare the data for analysis. For example, the data pre-processor 308 may use machine learning algorithms to identify and correct anomalous sensor readings or apply time series interpolation methods to fill gaps in historical data. In some implementations, the data pre-processor 308 may perform data fusion, combining information from multiple sensors to create a more comprehensive representation of field conditions. The preprocessed data may then be forwarded to the rut estimator 302 for further analysis.

The rut estimator 302 may analyze the processed data to determine rut characteristics 316. In some implementations, the rut estimator 302 may utilize advanced machine learning models, such as convolutional neural networks or random forests, to identify patterns indicative of rut formation. For example, the rut estimator 302 may analyze multispectral imagery to detect changes in soil reflectance associated with compaction and rutting. In some implementations, the rut estimator 302 may employ physics-based models that simulate soil mechanics and vehicle-terrain interactions to predict rut formation under various conditions. The rut estimator 302 may incorporate uncertainty quantification techniques to provide confidence intervals for its predictions.

The rut characteristics 316 generated by the rut estimator 302 may include various properties of detected or predicted ruts. In some implementations, these characteristics may include rut depth, width, length, orientation, or spatial distribution across the field, among other examples. For example, the rut characteristics 316 may specify that a particular rut is 15 cm deep, 30 cm wide, and extends for 50 meters in a north-south direction. In some implementations, the rut characteristics 316 may include more complex properties such as rut cross-sectional profiles, soil displacement volumes, or temporal evolution patterns. The rut characteristics 316 may be provided to the mitigation component 304 and/or the representation component 306 for further processing and visualization.

The mitigation component 304 may generate control data 318 based on the rut characteristics 316 and other relevant information. In some implementations, the mitigation component 304 may use rule-based systems or decision trees to determine appropriate mitigation strategies for different types of ruts. For example, the mitigation component 304 may generate control signals to reduce vehicle speed and increase ground clearance when approaching deep ruts. In some implementations, the mitigation component 304 may employ reinforcement learning algorithms to optimize mitigation strategies over time, adapting to changing field conditions and equipment capabilities. The control data 318 generated by the mitigation component 304 may be transmitted to one or more destinations for execution and monitoring.

The control data 318 may be transmitted to a work machine 322, which may be an agricultural vehicle such as a tractor, harvester, or sprayer. In some implementations, the control data 318 may include specific instructions for adjusting vehicle parameters such as speed, steering angle, or implement height to navigate ruts safely and efficiently. For example, the control data 318 may instruct the work machine 322 to lift its implement by 10 cm and reduce speed by 30% when crossing a detected rut. In some implementations, the control data 318 may provide more general guidance, allowing the work machine's onboard systems to make fine-tuned adjustments based on local conditions.

The control data 318 may be transmitted to a client application 320, which may be executing on a mobile device or computer used by field operators or managers. In some implementations, the client application 320 may display real-time updates on rut locations and mitigation actions, allowing human operators to monitor and override automated decisions if necessary. For example, the client application 320 may show a map of the field with color-coded rut severity indicators and planned machine paths. In some implementations, the client application 320 may provide interfaces for manually adjusting mitigation strategies or inputting additional field observations to improve the system's performance.

In some implementations, the control data 318 may be sent to an irrigation system 324, which may be a center pivot, linear move, or other type of agricultural irrigation equipment. In some implementations, the control data 318 may instruct the irrigation system 324 to adjust its watering patterns or wheel operation to minimize rut formation or avoid exacerbating existing ruts. For example, a wheel may be stopped to allow a location to dry before being traversed or time spent by a tower in an area may be minimized by speeding up the corresponding wheel. In another example, the control data 318 may direct the irrigation system 324 to increase water application rates in areas prone to rutting, promoting vegetation growth that can help stabilize the soil. In another example, if heavy rain is in a short term forecast, the control data 318 may instruct the irrigation system 324 to reduce water application and move the irrigation system 324 beyond an area prone to rutting. In some implementations, the control data 318 may coordinate the movements of the irrigation system 324 with those of other field equipment to prevent overlapping wheel tracks and reduce overall soil compaction.

The representation component 306 may generate representation data 326 that visually, audibly, or haptically communicates rut information or mitigation strategies. In some implementations, the representation component 306 may create 2D or 3D maps of a field showing rut locations, depths, or other relevant characteristics. For example, the representation component 306 may generate heat maps indicating rut severity or vector graphics showing predicted rut formation patterns under different field management scenarios. In some implementations, the representation component 306 may produce augmented reality overlays that can be viewed through smart glasses or mobile devices, allowing field workers to see virtual representations of ruts superimposed on their real-world view of the field.

The representation data 326 may be provided to a user interface 328, which may be part of the client application 320 or a separate display system. In some implementations, the user interface 328 may be a touchscreen display mounted in the cab of a work machine, allowing operators to interact with rut information and mitigation plans while in the field. For example, the user interface 328 may allow operators to zoom in on specific areas of concern, toggle between different data layers, or manually mark additional ruts that they observe. In some implementations, the user interface 328 may be a web-based dashboard accessible from multiple devices, enabling remote monitoring and management of rut mitigation efforts across multiple fields or farms. In some implementations, queries and information about ruts may be communicated via speech, sound, or vibration.

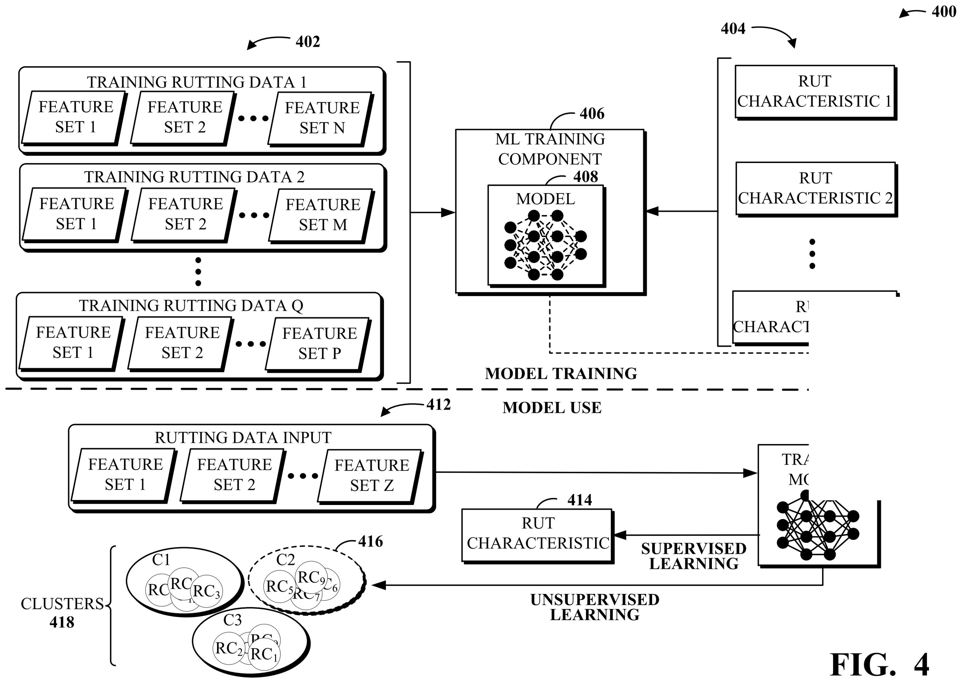

FIG. 4 is a block diagram illustrating an example 400 associated with machine learning for processing and analyzing rutting data, which may be implemented as part of the terrain anomaly mitigation platform 112 shown in FIG. 1, to determine rut characteristics. The example 400 shows an example of training and using a machine learning model. The machine learning model training and usage described herein may be performed using an artificial intelligence component of the terrain anomaly mitigation platform 112 shown in FIG. 1. As shown, the example 400 includes observation data sets 402, target variables 404 (e.g., labels), a training component 406 configured to train a model 408, a trained model 410, rutting data input 412 (e.g., an input observation), a rut characteristic 414 (e.g., a new target variable), and an identified cluster 416 of clusters 418, including a first cluster C1, a second cluster C2, and a third cluster C3.

The observation data sets 402 may include multiple sets of training rutting data collected from various sources related to rut formation. Training rutting data refers to rutting data used to train the model 408 to create the trained model 410. In some implementations, these data sets may include sensor readings from work machines, remotely sensed imagery of fields, soil moisture measurements, or historical records of field conditions. For example, an observation data set may contain time-series data from accelerometers mounted on agricultural equipment, capturing vibration patterns associated with traversing ruts. Alternatively, an observation data set may include multispectral satellite imagery showing variations in soil reflectance that could indicate the presence of ruts. In some implementations, the observation data sets 402 may also incorporate data from weather stations, providing information on precipitation patterns that could influence rut formation.

Each observation of the observation data sets 402 may include multiple features. The features may include a set of variables, and a variable may be referred to as a feature. A specific observation may include a set of variable values (or feature values) corresponding to the set of variables. In some implementations, the system may determine variables for a set of observations and/or variable values for a specific observation based on input received from the AI system. For example, the training component 406 may identify a feature set (e.g., one or more features and/or feature values) by extracting the feature set from structured data, by performing natural language processing to extract the features from verbal or textual data, by receiving input from an operator, and/or the like.

The target variables 404 represent the specific rut characteristics or properties that the system aims to predict or classify. For example, rut characteristic 1 may represent a rut characteristic corresponding to training rutting data 1, rut characteristic 2 may represent a rut characteristic corresponding to training rutting data 2, rut characteristic Q may represent a rut characteristic corresponding to training rutting data Q, and so on. In some implementations, these target variables may include rut depth, width, length, or severity ratings. For example, a target variable might be the maximum depth of a rut measured in centimeters. Alternatively, a target variable could be a categorical classification of rut severity, such as "minor," "moderate," or "severe." In some implementations, the target variables 404 may also include more complex properties, such as the cross-sectional profile of a rut or its rate of change over time. In this way, the target variables 404 may be referred to, interchangeably, as "labels." Labels represent known outcomes or classifications for the training data. A label may represent a variable having a numeric value, may represent a variable having a numeric value that falls within a range of values or has some discrete possible values, may represent a variable that is selectable from one of multiple options, may represent a variable having a Boolean value, and/or the like.

The new target variable (rut characteristic 414) may represent a value that the model 408 is being trained to predict, and the rutting data input 412 may represent the variables that are input to the trained model 410 to predict a value for the target variable. The observation data sets may include target variable values (e.g., labels) so that the machine learning model 408 can be trained to recognize patterns in the feature set that lead to a target variable value. A machine learning model that is trained to predict a target variable value may be referred to as a supervised learning model.

In some implementations, the machine learning model 408 may be trained on a set of observations that do not include a label. This may be referred to as an unsupervised learning model. In this case, the machine learning model 408 may learn patterns from the set of observations without labeling or supervision, and may provide output that indicates such patterns, such as by using clustering and/or association to identify related groups of items within the set of observations.

The training component 406 may be configured to process the observation data sets 402 and target variables 404 to develop a predictive model. In some implementations, the training component 406 may employ various machine learning algorithms, such as neural networks, random forests, or support vector machines. For example, the training component 406 might use a deep learning approach with convolutional neural networks to analyze image data for rut detection. In some implementations, it could implement a gradient boosting algorithm to predict rut characteristics based on a combination of numerical and categorical features. In some implementations, the training component 406 may incorporate techniques for handling imbalanced datasets or feature selection to optimize model performance.

In some implementations, reinforcement learning techniques may be employed to optimize the rut detection and mitigation process over time. The training component 406 may utilize a reinforcement learning agent that interacts with the agricultural environment, learning from the outcomes of its actions to improve decision-making. For example, the agent may learn to adjust mitigation strategies based on the effectiveness of previous interventions, considering factors such as soil conditions, weather patterns, and equipment characteristics.

The reinforcement learning framework may incorporate a state space that represents the current field conditions, including rut characteristics, soil moisture levels, and equipment positions. The action space may encompass various mitigation options, such as adjusting machine speed, modifying implement settings, or altering irrigation patterns. A reward function may be defined to evaluate the success of each action, potentially considering metrics like reduction in rut severity, improvement in crop yield, or minimization of equipment wear. Through repeated interactions and feedback, the agent may develop a policy that optimizes long-term rut management outcomes.

In some implementations, the reinforcement learning approach may be implemented using algorithms such as Q-learning, Deep Q-Networks (DQN), or Proximal Policy Optimization (PPO). These algorithms may enable the system to handle the complexities of the agricultural environment, including delayed rewards and partially observable states. For instance, a DQN may be used to approximate the optimal action-value function, allowing the system to make decisions in high-dimensional state spaces that include multiple rut characteristics and environmental factors. The reinforcement learning model may be continuously updated based on new data and experiences, allowing it to adapt to changing field conditions and evolving agricultural practices.

The model 408 within the training component 406 represents the specific machine learning algorithm or statistical approach used to learn patterns from the input data. In some implementations, the model 408 may be a single algorithm, such as a decision tree or a logistic regression model. For example, the model 408 could be a random forest classifier trained to identify the presence of ruts in satellite imagery. Alternatively, the model 408 might be an ensemble of multiple algorithms, combining their predictions to improve overall accuracy. In some implementations, the model 408 may also include preprocessing steps, such as data normalization or feature engineering, as part of its architecture.

The trained model 410 is the result of applying the training process to the observation data sets 402 and target variables 404. In some implementations, the trained model 410 may be a set of learned parameters, such as the weights in a neural network or the split points in a decision tree. For example, a trained model for rut depth prediction might consist of a series of mathematical functions that transform input features into a depth estimate. In some implementations, the trained model 410 could be a collection of rules or decision boundaries learned from the training data. In some implementations, the trained model 410 may also include metadata about its performance, such as accuracy metrics on validation data or confidence intervals for its predictions.

The rutting data input 412 represents new, unseen data that is provided to the trained model 410 for analysis or prediction. In some implementations, this input may be similar in structure to the observation data sets 402 but without the corresponding target variables. For example, the rutting data input 412 might include recent sensor readings from a work machine operating in a field where rut characteristics need to be predicted. In some implementations, it could be a set of environmental and operational parameters for which the likelihood of rut formation needs to be assessed. In some implementations, the rutting data input 412 may also include real-time streaming data, allowing for continuous monitoring and prediction of rut characteristics.

The rut characteristic 414 is the output generated by the trained model 410 when processing the rutting data input 412. Processing the rutting data input 412 may involve various computational steps, depending on the type of model used. For example, in a neural network, the processing may involve forward propagation of the input data through the network layers. In a decision tree model, it would involve traversing the tree based on the input features. Some implementations may incorporate additional pre-processing steps or feature engineering techniques to optimize model performance. In some implementations, the rut characteristic 414 may be a single value, such as a predicted rut depth or a probability score for the presence of a rut. For example, the rut characteristic 414 might be a numerical value indicating the estimated width of a rut in centimeters. In some implementations, the rut characteristic 414 could be a multi-dimensional output, providing predictions for multiple rut properties simultaneously. In some implementations, the rut characteristic 414 may also include uncertainty estimates or confidence intervals, giving an indication of the model's certainty in its predictions.

Clusters 418, including a first cluster C1, a second cluster C2, and a third cluster C3, illustrate the ability of the trained model 410 to group similar observations together. The clusters 418 represent the broader set of groupings or patterns identified within the rut data, of which the identified cluster 416 is a specific instance. In some implementations, these clusters may be used to categorize different types of ruts or to identify distinct patterns in rut formation across various fields or conditions. For example, the clusters 418 might include groupings based on rut severity, with separate clusters for minor, moderate, and severe ruts. In some implementations, the clusters could represent different rut formation mechanisms, such as those caused by heavy machinery versus those resulting from water erosion. In some implementations, the clusters 418 may also be hierarchical, with broader categories subdivided into more specific groupings based on various characteristics.

The identified cluster 416 represents a specific grouping or pattern recognized within the rut data, potentially highlighting areas of similar rut characteristics or formation conditions. In some implementations, the identified cluster 416 may be determined through unsupervised learning techniques applied to the rut characteristics or input features. Some implementations may employ more sophisticated clustering techniques, such as hierarchical clustering or density-based clustering, to identify more nuanced patterns in the data. For example, the identified cluster 416 might represent a group of ruts with similar depth and width profiles located in a particular area of a field. In some implementations, the identified cluster 416 may be a cluster of environmental conditions associated with a high likelihood of rut formation. In some implementations, the identified cluster 416 may include temporal aspects, identifying patterns in rut evolution over time.

In some implementations, the example 400 may incorporate additional components or alternative arrangements to enhance its capabilities. For instance, a feature selection module could be added before the training component 406 to identify the most relevant input variables for rut prediction. In some implementations, a model evaluation component could be included to continuously assess the performance of the trained model 410 and trigger retraining when necessary. Some implementations may include a feedback loop, where the predictions and identified clusters are used to update the observation data sets 402 and refine the model over time.

The connections between components in the example 400 illustrate the flow of data and information through the system. In some implementations, these connections may represent physical data transfer mechanisms, such as network protocols or database queries. Alternatively, they could represent logical relationships between different stages of the data processing pipeline. The bidirectional arrow between the training component 406 and the model 408 may represent an iterative training process, where the model is repeatedly updated based on its performance on the training data.

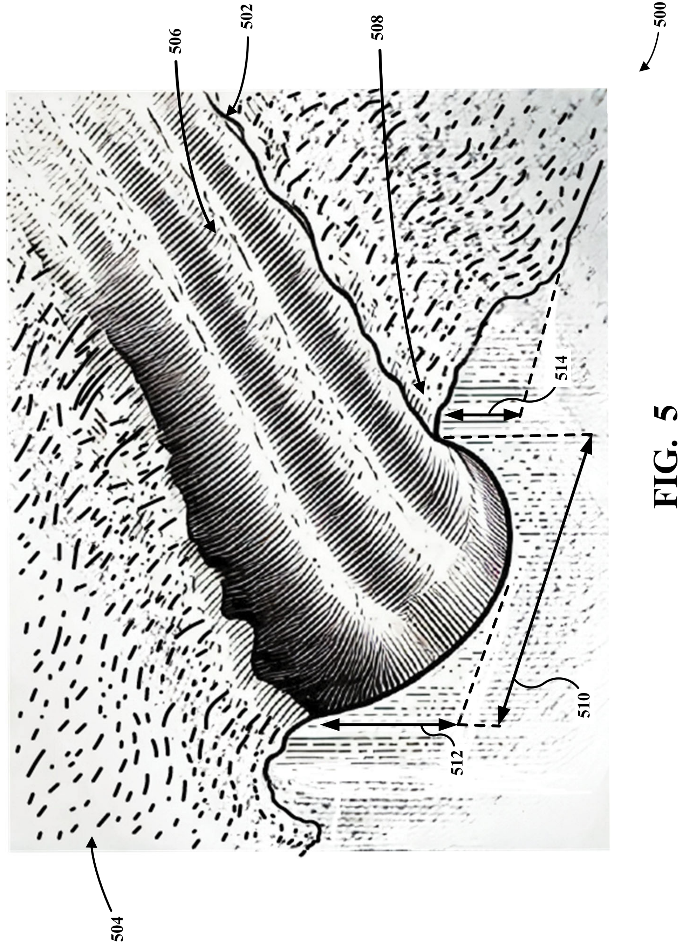

FIG. 5 is a sectional view illustrating an example 500 showing characteristics of a rut 502 formed in a ground surface 504. The rut 502 includes a rut depression 506 that extends below the ground surface 504 and a rut ridge 508 that extends above the ground surface 504. The rut width 510 represents the lateral span of the rut depression 506. The depression depth 512 indicates the vertical distance the rut depression 506 extends below the ground surface 504, while the ridge height 514 shows the vertical distance the rut ridge 508 extends above the ground surface 504.

In some implementations, the ground surface 504 may represent the upper boundary of soil at a worksite such as an agricultural field, construction site, or other outdoor work area. The ground surface 504 may be composed of various materials, such as topsoil, clay, sand, or gravel, depending on the specific location or environmental conditions. In some cases, the ground surface 504 may be covered with vegetation, such as grass or crop residue.

The rut 502 may be formed by various mechanisms in different implementations. For example, the rut 502 may be created by the passage of machinery, such as tractors, harvesters, or construction equipment, over the ground surface 504. In other cases, the rut 502 may result from water erosion, particularly in areas with steep slopes or during periods of heavy rainfall. In some implementations, the rut 502 may be formed by a combination of factors, such as the compaction of wet soil by vehicle traffic followed by further erosion due to water runoff.

The rut depression 506 represents the portion of the rut 502 that extends below the original ground surface 504. In some implementations, the rut depression 506 may have a relatively smooth, compacted surface due to the pressure applied by vehicle tires or tracks. In other cases, the rut depression 506 may have a more irregular surface, particularly if it has been subject to additional erosion or weathering after its initial formation. The shape of the rut depression 506 may vary depending on the forming mechanism and soil conditions. For example, it may have a U-shaped profile in softer soils or a V-shaped profile in harder, more resistant soils.

The rut ridge 508 is the raised portion of soil that may form along one or both sides of the rut depression 506. In some implementations, the rut ridge 508 may be created by the displacement of soil as vehicles or water move through the rut. The height and shape of the rut ridge 508 may vary depending on factors such as soil type, moisture content, and the speed and weight of vehicles traversing the area. In some cases, the rut ridge 508 may be more pronounced on one side of the rut than the other, particularly if the rut was formed on a slope or if vehicles consistently traveled in one direction.

The rut width 510 provides a measure of the lateral extent of the rut 502. In some implementations, the rut width 510 may correspond closely to the width of the tires or tracks that formed the rut. However, in other cases, the rut width 510 may be significantly wider, particularly if the rut has been subject to additional erosion or if multiple passes of equipment have occurred with slight variations in path. The rut width 510 may also vary along the length of the rut, potentially narrowing or widening depending on changes in soil conditions or the path of the forming vehicle.

The depression depth 512 and ridge height 514 provide vertical measurements of the rut's impact on the ground surface. In some implementations, these measurements may be used to assess the severity of the rut and determine appropriate mitigation strategies. The depression depth 512 may vary along the length of the rut, potentially deepening in areas of softer soil or where water tends to pool. Similarly, the ridge height 514 may not be uniform along the rut's length, potentially varying based on soil displacement patterns and local topography.

In some implementations, the rut 502 may have a more complex profile than the simple depression and ridge structure shown in FIG. 5. For example, there may be multiple parallel ruts formed by vehicles with dual or triple tires. In other cases, the rut may have a stepped or terraced profile, particularly if it was formed by repeated passes of equipment at different depths. Some implementations may also consider the presence of loose soil or debris within the rut depression 506, which could affect the effective depth and characteristics of the rut.

The measurements and characteristics depicted in FIG. 5 may be determined through various means in different implementations, as described herein. For example, the rut width 510, depression depth 512, and ridge height 514 may be measured using laser scanning technology, photogrammetry, or physical probes. In some implementations, these measurements may be taken at multiple points along the length of the rut to create a more comprehensive profile. The data collected from these measurements may be used to create detailed 3D models of the rut and surrounding terrain, which could be utilized by terrain anomaly mitigation platforms to plan appropriate responses.

In some implementations, the characteristics of the rut 502 may change over time due to various factors. For example, additional traffic over the rut may cause the depression depth 512 to increase and the rut width 510 to expand. Conversely, natural processes such as soil settling or vegetation growth may gradually reduce the ridge height 514 and partially fill in the rut depression 506. Weather events, such as heavy rain or freeze-thaw cycles, may also alter the rut's profile over time. These dynamic changes may be monitored and accounted for in some implementations of rut detection and mitigation systems.

The information provided by the sectional view in FIG. 5 may be used in various ways within a rut detection and mitigation system. For example, the depression depth 512 and rut width 510 may be used to classify the severity of the rut and determine whether mitigation action is necessary. The ridge height 514 and overall rut profile may inform decisions about appropriate equipment settings, such as the necessary ground clearance for vehicles traversing the area. In some implementations, this detailed rut characteristic information may be combined with broader field data to create comprehensive terrain maps and guide field management strategies.

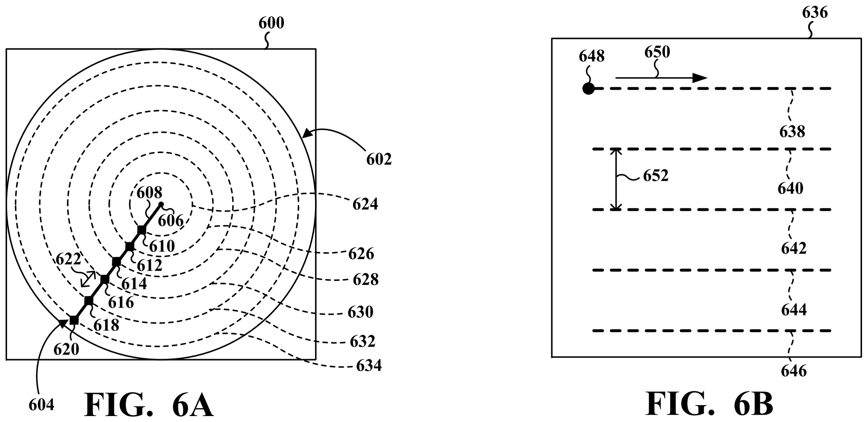

FIGS. 6A and 6B are schematic diagrams illustrating examples of irrigation systems and associated rut patterns in agricultural fields.

FIG. 6A depicts a land portion 600 containing a field boundary 602 and a pivot irrigation system 604. In some implementations, the land portion 600 may represent an agricultural field or a section of a larger farm. In some examples, the land portion 600 may vary in size, ranging from a fraction of an acre to several hundred acres. In some cases, the land portion 600 may have irregular shapes to accommodate natural features such as rivers, hills, or forested areas. In some implementations, the land portion 600 may be a perfectly square or rectangular plot of land.

The field boundary 602 delineates the outer limits of the irrigated area within the land portion 600. In some implementations, the field boundary 602 may be defined by physical barriers such as fences, roads, or tree lines. In other cases, the field boundary 602 may be a virtual boundary established using GPS coordinates or other geospatial data. The field boundary 602 may be circular to match the reach of the pivot irrigation system 604, or it may extend beyond the irrigated area to include non-irrigated corners of the field.

The pivot irrigation system 604 is a type of automated irrigation equipment designed to distribute water in a circular pattern around a central point. In some implementations, the pivot irrigation system 604 may consist of a series of connected pipe segments supported by wheeled towers. These pipe segments may range from 100 to 300 feet in length, with the entire system potentially spanning up to a quarter-mile or more in radius. In some implementations, smaller pivot systems may be used for irregularly shaped fields or areas with limited water resources.

The pivot center 606 serves as the fixed point around which the pivot arm 608 rotates. In some implementations, the pivot center 606 may be connected to a water source through underground piping. The pivot center 606 may also house control systems for managing water flow and system movement. In some cases, the pivot center 606 may be elevated on a concrete pad to protect it from flooding or to accommodate sloping terrain. The pivot arm 608 extends outward from the pivot center 606 and supports the irrigation equipment. The pivot arm 608 may incorporate flexible joints to allow for movement over uneven terrain. In some cases, the pivot arm 608 may be equipped with sprinklers, spray nozzles, or drop hoses to distribute water along its length.

A first tower 610, second tower 612, a third tower 614, a fourth tower 616, a fifth tower 618, and a sixth tower 620 are support structures that move the pivot arm 608 around the field. In some implementations, these towers may be self-propelled using electric or hydraulic motors. The towers may be equipped with wheels or tracks, depending on soil conditions and field requirements. In some cases, the towers may incorporate guidance systems to ensure they maintain proper alignment as they move. The pivot irrigation system 604 may include any number of towers. An inter-tower distance 622 represents the spacing between adjacent towers along the pivot arm 608. In some implementations, this distance may be standardized, typically ranging from 80 to 200 feet. The inter-tower distance 622 may be adjusted based on factors such as field size, crop type, or desired irrigation precision. In some cases, variable inter-tower distances may be used within a single system to accommodate field irregularities or to provide more uniform water distribution.

As the pivot irrigation system 604 operates, it creates circular rut patterns including, for example, a first rut 624 created by the first tower 610, a second rut 626 created by the second tower 612, a third rut 628 created by the third tower 614, a fourth rut 630 created by the fourth tower 616, a fifth rut 632 created by the fifth tower 618, and a sixth rut 634 created by the sixth tower 620. In some implementations, the ruts may vary in depth and width depending on factors such as soil type, moisture content, and the weight of the irrigation equipment. The ruts may be more pronounced in areas where the soil is frequently saturated.

In some implementations, irrigation system data associated with the pivot irrigation system 604 may be used to facilitate rut detection and mitigation. This data may include information such as the location of the pivot center 606, the number of towers, the inter-tower distance 622, and the overall radius of the system. By utilizing this readily available information, some implementations may predict the likely locations of ruts without the need for extensive sensor systems or complex image processing algorithms. For example, knowing the pivot center 606 location and the number of towers, a simple geometric calculation may be performed to estimate the circular paths that each tower follows, potentially indicating where ruts are likely to form.

Some implementations may take a straightforward approach by using the irrigation system data to create a basic map of potential rut locations. This map may be overlaid on existing field management software or integrated into the navigation systems of agricultural machinery. Such an approach may be relatively simple to implement and may not require significant computational resources or specialized hardware. In some cases, this method may be particularly useful for smaller farming operations or as an initial step in more comprehensive rut management strategies. Some implementations may combine this basic irrigation system data with historical information about soil types and weather patterns to refine predictions about rut severity and persistence, potentially allowing for more targeted and efficient mitigation efforts.

FIG. 6B shows a land portion with a linear field boundary 636 containing a linear irrigation system. The linear field boundary 636 in FIG. 6B represents the outer limits of a field irrigated by a linear irrigation system. In some implementations, this boundary may be rectangular or square to maximize the efficiency of the linear system. The linear field boundary 636 may be defined by physical features such as roads or property lines, or it may be established using GPS-guided systems to ensure precise irrigation coverage.

The linear irrigation system creates parallel ruts including a first linear track 638, a second linear track 640, a fourth linear track 642, a fifth linear track 644, and a sixth linear track 646. In some implementations, the linear irrigation system may include any number of linear tracks. In some implementations, these tracks may be relatively straight, maintained by guidance systems using GPS or buried wire technology. Alternatively, the tracks may have slight curves or deviations to accommodate field topography or obstacles.

As shown with reference to the first linear track 638, a linear track 638 originates from a track start point 648, which may serve as the initial position for the irrigation system. In some implementations, the track start point 648 may be located at one end of the field, often near a water source or power supply. The track start point 648 may incorporate infrastructure such as concrete pads or electrical connections to support the irrigation equipment.

The track direction 650 indicates the path along which the linear irrigation system moves. In some implementations, this direction may be perpendicular to the main water supply line, allowing for efficient water distribution. The track direction 650 may be programmed into the system's control unit, potentially allowing for reversing or alternating directions to ensure even coverage.

Adjacent tracks are separated by a track spacing 652, which determines the coverage area of the irrigation system. In some implementations, the track spacing 652 may be optimized based on the spray pattern of the irrigation nozzles and the water requirements of the crops. The track spacing 652 may be adjustable, allowing farmers to modify the irrigation pattern for different crops or growing conditions.

In some implementations, irrigation system data associated with the linear irrigation system may be used to facilitate rut detection and mitigation. This data may include information such as a track start point 648, a track direction 650, a track spacing 652, and an overall length of the irrigation system. By utilizing this readily available information, some implementations may predict the likely locations of ruts without the need for extensive sensor systems or complex image processing algorithms. For example, knowing the track start point 648 and track direction 650, a simple calculation may be performed to estimate the parallel paths that the irrigation system follows, potentially indicating where ruts are likely to form.

Some implementations may take a straightforward approach by using the irrigation system data to create a basic map of potential rut locations for linear irrigation systems. This map may be overlaid on existing field management software or integrated into the navigation systems of agricultural machinery. Such an approach may be relatively simple to implement and may not require significant computational resources or specialized hardware. In some cases, this method may be particularly useful for smaller farming operations or as an initial step in more comprehensive rut management strategies. Some implementations may combine this basic irrigation system data with historical information about soil types and weather patterns to refine predictions about rut severity and persistence, potentially allowing for more targeted and efficient mitigation efforts. Additionally, in some implementations, the system may allow users to input the starting location of the first track or border, the directional heading, and the spacing between tracks, providing a simple yet effective method for identifying potential rut locations in fields with linear irrigation systems.

In some implementations, boarder irrigation systems may share similar characteristics with linear irrigation systems. Boarder irrigation may involve dividing a field into parallel strips or boarders separated by raised earthen banks or dikes, similar to how the linear tracks 638, 640, 642, 644, and 646 are spaced in FIG. 6B. These systems may be designed to distribute water across the field by allowing it to flow down a gentle slope within each boarder. The layout of a boarder irrigation system may be defined by parameters analogous to those of the linear system shown in FIG. 6B. For instance, the starting location of the first boarder may correspond to the track start point 648, while the orientation of the boarders may be represented by a directional heading similar to the track direction 650. The spacing between adjacent boarders (which may include an inter-dike distance, an inter-boarder distance, etc.) may be comparable to the track spacing 652 in linear systems. In some cases, the width of individual boarders ("boarder width") and the dimensions of the dikes (e.g., a dike width, a dike depth, etc.) may also be relevant parameters for characterizing the system's layout. Boarder irrigation systems may be suitable for certain crop types and field conditions, potentially offering advantages in water distribution efficiency and soil erosion control in some agricultural settings.

The process for rut detection and mitigation in boarder irrigation systems may follow a similar approach to that used for linear systems. In some implementations, irrigation system data such as the starting location of the first boarder, the spatial orientation of the boarders, and the inter-boarder distance may be obtained. This information may be used to generate a basic map of potential rut locations, which may be integrated with existing field management software or agricultural machinery navigation systems. The potential rut locations may correspond to the boarders (e.g., a boarder may be considered to be a rut). In some implementations, the system may predict areas where other ruts are likely to form, particularly along the edges of boarders where water flow and machinery traffic may be concentrated. By leveraging this irrigation system data, some implementations may enable proactive rut management strategies without relying on complex sensor arrays or image processing techniques, potentially offering a cost-effective solution for smaller farming operations or as an initial step in more comprehensive field management approaches.

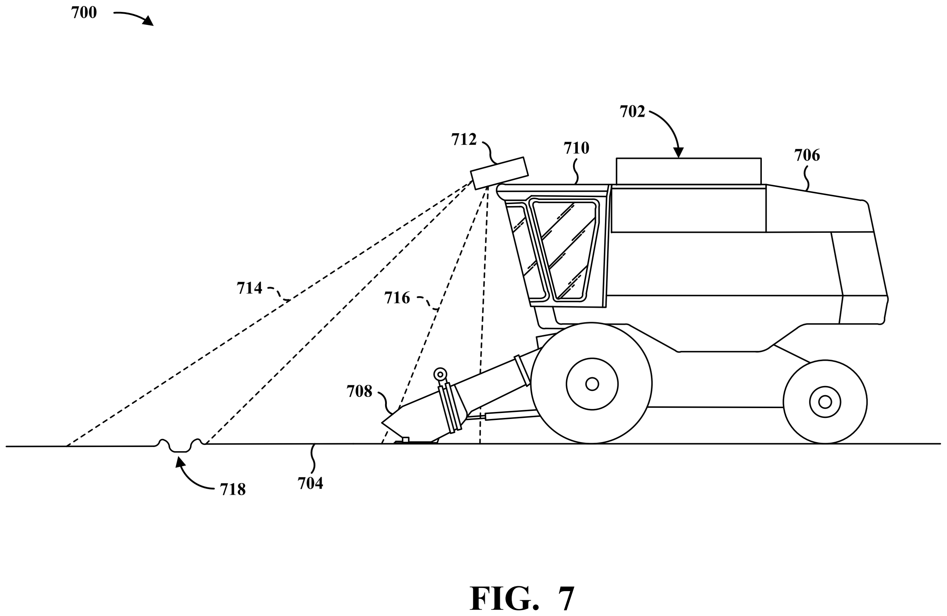

FIG. 7 is a side view illustrating an example 700 of a work machine 702 operating on a ground surface 704. As shown, the work machine 702 includes a machine body 706, an implement 708, and an operator cabin 710. A sensor 712 is mounted on the work machine 702 and has a first field-of-view 714 and a second field-of-view 716 directed toward the ground surface 704. The sensor 712 is positioned to detect a rut 718 in the ground surface 704.

The work machine 702 may represent various types of agricultural or construction equipment designed to traverse and perform operations on the ground surface 704. In some implementations, the work machine 702 may be a tractor, combine harvester, sprayer, or tillage implement. Alternatively, the work machine 702 may be a bulldozer, excavator, or grader used in construction applications. The work machine 702 may be manually operated, semi-autonomous, or fully autonomous, depending on the specific implementation and operational requirements.

The machine body 706 forms the main structure of the work machine 702, providing support and housing for various components. The machine body 706 may include mounting points for attaching implements, sensors, and other accessories, allowing for modular configurations of the work machine 702. The implement 708 is attached to the work machine 702 and is designed to perform specific tasks on the ground surface 704. In some implementations, the implement 708 may be a plow, disc harrow, or seed drill for agricultural applications. Alternatively, the implement 708 could be a bucket, blade, or ripper for construction work. The implement 708 may be adjustable, allowing its height, angle, or other parameters to be modified in response to detected ground conditions. In some cases, the implement 708 may be equipped with its own sensors or actuators, enabling more precise control and data collection during operations.

The operator cabin 710 provides a protected space for the machine operator and may house various controls and displays. In some implementations, in autonomous or remote-controlled versions of the work machine 702, the operator cabin 710 may be reduced in size or eliminated entirely, replaced by additional sensor arrays or payload capacity. The operator cabin 710 may include touchscreen displays, joysticks, and other interface devices for machine control and monitoring.

The sensor 712 mounted on the work machine 702 may be used to detect and characterize ruts and other terrain features. In some implementations, the sensor 712 may be a LiDAR system, capable of creating detailed 3D point clouds of the ground surface 704. In some implementations, the sensor 712 could be an image sensor (e.g., a camera or camera system), radar unit, or ultrasonic sensor array. The sensor 712 may incorporate multiple sensing modalities, fusing data from different sources to improve accuracy and reliability. In some cases, the sensor 712 may be mounted on a gimbal or adjustable platform, allowing its orientation to be optimized for different operating conditions or terrain types. In some implementations, the sensor 712 may include a machine weight sensor or a wheel velocity sensor, among other examples.

The first field-of-view 714 and second field-of-view 716 represent the areas monitored by the sensor 712. In some implementations, these fields of view may overlap to provide redundant coverage of critical areas in front of the work machine 702. In some implementations, they may be oriented to cover different regions, such as one field of view scanning the immediate path of the machine while the other surveys a wider area for route planning. The fields of view may be adjustable, either through mechanical means or by electronically steering the sensor's focus. In some cases, additional fields of view may be incorporated to provide 360-degree awareness around the work machine 702.

The rut 718 in the ground surface 704 represents a terrain anomaly that the work machine 702 may need to detect and navigate. In some implementations, the rut 718 may be caused by previous passes of heavy machinery or by water erosion. Alternatively, the rut 718 could be an intentionally created furrow or trench as part of agricultural or construction operations. The dimensions and characteristics of the rut 718 may vary widely, from shallow depressions to deep channels, and the sensor 712 may be calibrated to detect and classify different types of ruts based on their geometry and context within the broader terrain.

In some implementations, the work machine 702 may use the data collected by the sensor 712 about the rut 718 to adjust its operations in real-time. This could involve modifying the position of the implement 708, altering the machine's speed or trajectory, or activating specialized rut-mitigation attachments. The system may also log information about detected ruts for later analysis or to update terrain maps used in future operations. In some cases, the work machine 702 may communicate rut information to other machines or a central management system, enabling coordinated responses to challenging terrain conditions across an entire worksite.

In some implementations, the work machine 702 may include a geolocation device, such as a Global Positioning System (GPS) receiver or other satellite-based navigation system. The work machine may include a GPS unit. A GPS device can be used to determine the geographic location of the respective machine by receiving signals from multiple GPS satellites and calculating the machine's position based on the time delay of the received signals. Additionally, or alternatively, other positioning technologies such as Real-Time Kinematic (RTK) GPS, Radio Frequency Identification (RFID), Bluetooth Low Energy (BLE) beacons, Differential GPS (DGPS), and Long-Range Navigation (Loran) may be used to accomplish the same purpose.

The data acquired by the sensor 712 may be paired with the geolocation data, allowing for accurate mapping of detected ruts and other terrain features. This pairing of sensor data with location information may enable the creation of detailed, georeferenced terrain maps that can be used for various purposes, such as route planning, rut mitigation strategies, or long-term field management. In some cases, the system may combine data from multiple passes over the same area, potentially improving the accuracy and resolution of the terrain mapping over time. The geolocation data may also be used to correlate rut locations with other georeferenced information, such as soil type maps, yield data, or historical weather patterns, potentially providing insights into the factors contributing to rut formation in specific areas of the worksite.

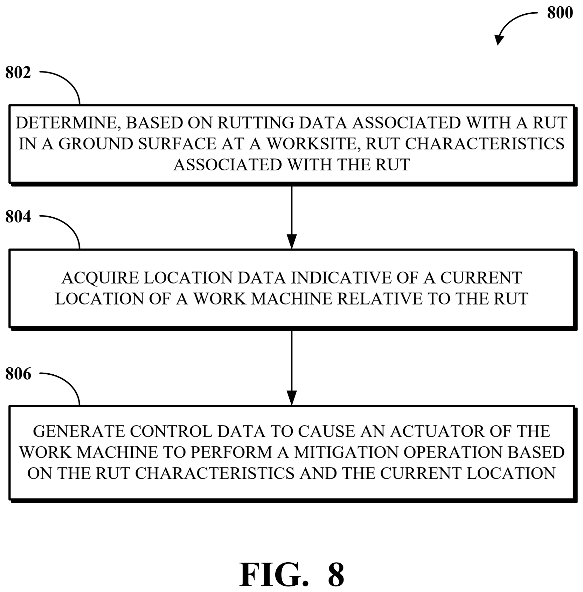

To further describe some implementations in greater detail, reference is next made to examples of techniques which may be performed by or using a rut detection and mitigation system as described herein. FIG. 8 is a flowchart of an example of a technique 800 for rut detection and mitigation. The technique 800 can be executed using computing devices, such as the systems, hardware, and software described with respect to FIGS. 1-7. The technique 800 can be performed, for example, by executing a machine-readable program or other computer-executable instructions, such as routines, instructions, programs, or other code. The steps, or operations, of the technique 800, or another technique, method, process, or algorithm described in connection with the implementations disclosed herein can be implemented directly in hardware, firmware, software executed by hardware, circuitry, or a combination thereof.

For simplicity of explanation, the technique 800 is depicted and described herein as a series of steps or operations. However, the steps or operations of the technique 800 can occur in various orders and/or concurrently. Additionally, other steps or operations not presented and described herein may be used. Furthermore, not all illustrated steps or operations may be required to implement a technique in accordance with the disclosed subject matter.

At 802, the technique 800 may include determining rut characteristics associated with a rut in a ground surface at a worksite based on rutting data. In some implementations, this step may involve processing various types of rutting data to identify and characterize ruts present in the worksite. The rutting data may comprise a wide range of information related to the formation, characteristics, and impact of ruts in agricultural fields or other work areas.

In some implementations, the rutting data may include precipitation data, which can indicate the amount and timing of rainfall or irrigation that may affect soil moisture levels and susceptibility to rutting. This data may be obtained from various sources such as weather radar systems, on-site rain gauges, weather satellites, or nearby weather stations. Soil data may be included in the rutting data, providing information about soil type, texture, and composition that can influence rut formation and persistence. This may be derived from soil type maps, soil sampling and laboratory analysis, or electromagnetic soil mapping techniques.

The rutting data may incorporate tillage history data, which can offer insights into past field operations that may have affected soil structure and compaction. This information may be accessed from farm management software, digital record-keeping systems, or inferred from historical satellite or aerial imagery. Soil compaction data may be directly included as part of the rutting data, providing measurements or estimates of soil density and resistance to penetration.

In some implementations, the rutting data may include shadow data derived from aerial or satellite imagery. This data may be used to detect ruts based on the shadows they cast under certain lighting conditions. The system may utilize high-resolution imagery captured under specific lighting conditions, incorporating data on sun angle and position, sky cover information, and potentially LiDAR data to create detailed 3D models of the field surface.

Work machine data may be included in the rutting data to understand the mechanical factors contributing to rut formation. This may encompass information about the machine's configuration, such as the number of axles, number and width of tires or tracks, total weight, and operational parameters like speed and acceleration patterns. In some implementations, the rutting data may include user input data, allowing for manual observations or historical knowledge to be incorporated into the analysis.

The rut characteristics may include various physical properties and attributes that describe the nature and extent of ruts in the ground surface. These characteristics may encompass measurements such as rut depth, which indicates how far the depression extends below the normal ground level. The width of the rut may be considered, potentially including both the depression width and any associated ridge width. In some implementations, the rut characteristics may include the length or extent of the rut across the field. The shape or profile of the rut may be another important characteristic, as ruts can have different cross-sectional geometries depending on the conditions of their formation. In some implementations, the rut characteristics may include information about the material displacement, such as the volume or mass of soil moved during rut formation. In some cases, the stability or persistence of the rut may be assessed as part of its characteristics. The orientation and location of ruts within the field may be included in the set of rut characteristics. Some implementations may consider the roughness or texture of the rut surface as a relevant characteristic. The rut characteristics may include temporal aspects, such as the rate of change or evolution of the rut over time.

At 804, the technique 800 may include acquiring location data indicative of a current location of a work machine relative to the rut. This step may involve using various positioning technologies to determine the precise location of the work machine within the worksite. In some implementations, this may include using a Global Positioning System (GPS) receiver or other satellite-based navigation system. Additionally, or alternatively, other positioning technologies such as Real-Time Kinematic (RTK) GPS, Radio Frequency Identification (RFID), Bluetooth Low Energy (BLE) beacons, Differential GPS (DGPS), or Long-Range Navigation (Loran) may be used to accomplish the same purpose.

The location data may be paired with sensor data from the work machine to create accurate, georeferenced maps of detected ruts and other terrain features. In some implementations, the work machine may be equipped with various sensors such as cameras, LiDAR systems, radar units, or ultrasonic sensor arrays. These sensors may have multiple fields of view to provide comprehensive coverage of the area around the work machine. The sensor data, combined with the location data, may enable the creation of detailed terrain maps that can be used for route planning, rut mitigation strategies, or long-term field management.

At 806, the technique 800 may include generating control data to cause an actuator of the work machine to perform a mitigation operation based on the rut characteristics and the work machine's location. This step involves using the information gathered about rut characteristics and the work machine's position to determine appropriate actions for navigating or mitigating the detected ruts. In some implementations, the mitigation operation may involve adjusting the speed of the work machine, modifying its steering, or changing the height of an implement attached to the work machine.

The control data may be generated to facilitate various types of mitigation operations. For example, when approaching a deep rut, the control data may instruct the work machine to reduce its speed and raise an implement to avoid contact with the rut edges. In other cases, the control data may guide the work machine to navigate around severe ruts or to adjust its path to minimize repeated traversal of rutted areas. The specific mitigation operation may be determined based on factors such as the depth of the rut, the presence of ridges along the rut edges, and the overall geometry and shape of the rut.

In some implementations, the mitigation operation may be associated with longer-term strategies for rut repair or prevention. This could involve generating recommendations for field management practices, such as adjusting irrigation schedules, modifying tillage practices, or implementing controlled traffic farming techniques to minimize rut formation. The system may suggest the use of specialized equipment for rut repair, such as skid loaders, land planes, or rut fillers, and provide guidance on the optimal timing and method for these operations.

The technique 800 may also include steps for processing the rutting data using a rut model. In some implementations, this rut model may include one or more machine learning components, one or more statistical models, or one or more deterministic models. For example, a machine learning component may use convolutional neural networks to analyze satellite or aerial imagery for rut detection. The rut model may be trained on historical data to improve its accuracy in predicting rut formation and characteristics under various conditions.

In some implementations, the technique 800 may incorporate steps for handling specific types of irrigation system data. For pivot irrigation systems, this may include processing data such as pivot center location, number of irrigation towers, and inter-tower distance. For linear irrigation systems, the technique may handle information about track starting locations, directional headings, and inter-track distances. In the case of boarder irrigation systems, the technique may process data related to boarder starting locations, spatial orientations, widths, and associated dike information. In some implementations, a machine-learning component may include an image classification component hosted by a computing device of a work machine and/or by a terrain anomaly detection system.

The technique 800 may include steps for generating representation data to cause an output component of a client computing device to present a representation of the rut characteristic information. This may involve creating visual representations such as 2D or 3D maps of detected ruts, graphical representations of rut characteristics, or augmented reality overlays for machine operators. These representations may be displayed on various devices, including mobile devices, tablets, or displays mounted in the work machine's operator cabin.

In some implementations, the technique 800 may include steps for continuous monitoring and updating of rut information. This may involve using adaptive learning algorithms that can adjust their parameters in response to observed changes in rut characteristics. The technique may incorporate feedback mechanisms that allow the system to learn from discrepancies between predicted and observed rut characteristics, enabling the system to improve its accuracy over time and better handle the variability inherent in agricultural environments.

While the disclosure has been described in connection with certain embodiments, it is to be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

Persons skilled in the art will understand that the various embodiments of the present disclosure and shown in the accompanying figures constitute non-limiting examples, and that additional components and features may be added to any of the embodiments discussed hereinabove without departing from the scope of the present disclosure. Additionally, persons skilled in the art will understand that the elements and features shown or described in connection with one embodiment may be combined with those of another embodiment without departing from the scope of the present disclosure to achieve any desired result and will appreciate further features and advantages of the presently disclosed subject matter based on the description provided. Variations, combinations, and/or modifications to any of the embodiments and/or features of the embodiments described herein that are within the abilities of a person having ordinary skill in the art are also within the scope of the present disclosure, as are alternative embodiments that may result from combining, integrating, and/or omitting features from any of the disclosed embodiments.

Use of the term "optionally" with respect to any element of a claim means that the element may be included or omitted, with both alternatives being within the scope of the claim. Additionally, use of broader terms such as "comprises," "includes," and "having" should be understood to provide support for narrower terms such as "consisting of," "consisting essentially of," and "comprised substantially of." Accordingly, the scope of protection is not limited by the description set out above, but is defined by the claims that follow, and includes all equivalents of the subject matter of the claims.

In the preceding description, reference may be made to the spatial relationship between the various structures illustrated in the accompanying drawings, and to the spatial orientation of the structures. However, as will be recognized by those skilled in the art after a complete reading of this disclosure, the structures described herein may be positioned and oriented in any manner suitable for their intended purpose. Thus, the use of terms such as "above," "below," "upper," "lower," "inner," "outer," "left," "right," "upward," "downward," "inward," "outward," "horizontal," "vertical," etc., should be understood to describe a relative relationship between the structures and/or a spatial orientation of the structures. Those skilled in the art will also recognize that the use of such terms may be provided in the context of the illustrations provided by the corresponding figure(s).

Additionally, terms such as "approximately," "generally," "substantially," and the like should be understood to allow for variations in any numerical range or concept with which they are associated and encompass variations on the order of 25% (e.g., to allow for manufacturing tolerances and/or deviations in design). For example, the term "generally parallel" should be understood as referring to configurations in with the pertinent components are oriented so as to define an angle therebetween that is equal to 180° ± 25% (e.g., an angle that lies within the range of (approximately) 135° to (approximately) 225°). The term "generally parallel" should thus be understood as referring to encompass configurations in which the pertinent components are arranged in parallel relation.

Although terms such as "first," "second," "third," etc., may be used herein to describe various operations, elements, components, regions, and/or sections, these operations, elements, components, regions, and/or sections should not be limited by the use of these terms in that these terms are used to distinguish one operation, element, component, region, or section from another. Thus, unless expressly stated otherwise, a first operation, element, component, region, or section could be termed a second operation, element, component, region, or section without departing from the scope of the present disclosure.

Each and every claim is incorporated as further disclosure into the specification and represents embodiments of the present disclosure. Also, the phrases "at least one of A, B, and C" and "A and/or B and/or C" should each be interpreted to include only A, only B, only C, or any combination of A, B, and C.

Embodiments of the invention can be described with reference to the following numbered clauses, with preferred features laid out in dependent clauses:
1. A computer-implemented method, comprising:
   determining, based on rutting data associated with a rut in a ground surface at a worksite, rut characteristics associated with the rut, wherein the rut characteristics are indicative of at least one of a shape of the rut, a depth of the rut, a ridge height of the rut, a ridge width of the rut, a depression width of the rut, or a material displacement associated with the rut;
   acquiring location data indicative of a current location of a work machine relative to the rut; and
   generating control data to cause an actuator of the work machine to perform a mitigation operation based on the rut characteristics and the current location.
2. The computer-implemented method of clause 1, wherein the rutting data comprises at least one of precipitation data, soil data, tillage history data, soil compaction data, shadow data, work machine data, or user input data.
3. The computer-implemented method of clause 1 or clause 2, further comprising: receiving the rutting data from at least one sensor associated with the work machine.
4. The computer-implemented method of clause 3, wherein the at least one sensor includes an image sensor, a radio detection and ranging (RADAR) sensor, a light detection and ranging (LIDAR) sensor, a geolocation device, a machine weight sensor, a ground height sensor, or a wheel velocity sensor.
5. The computer-implemented method of any one of the preceding clauses, wherein the rutting data comprises irrigation system data.
6. The computer-implemented method of clause 5, further comprising: obtaining user input indicative of the irrigation system data.
7. The computer-implemented method of clause 6, wherein the irrigation system data is indicative of a pivot center associated with a pivot irrigation system, a number of irrigation towers of the pivot irrigation system, and an inter-tower distance associated with the pivot irrigation system.
8. The computer-implemented method of clause 6 or clause 7, wherein the irrigation system data is indicative of a track starting location associated with a first track of a plurality of tracks of a linear irrigation system, a directional heading associated with the linear irrigation system, and an inter-track distance associated with the linear irrigation system.
9. The computer-implemented method of any one of clauses 6 to 8, wherein the irrigation system data is indicative of a starting location associated with a first boarder of a plurality of boarders of a boarder irrigation system, a spatial orientation of the first boarder, and at least one of a boarder width associated with the first boarder, an inter-boarder distance associated with the boarder irrigation system, a dike width associated with the boarder irrigation system, or an inter-dike distance associated with the boarder irrigation system.
10. A system, the system comprising:
   one or more memories; and
   one or more processors communicatively coupled to the one or more memories and configured to execute instructions stored in the one or more memories to cause the system to:
      determining, based on rutting data associated with a rut in a ground surface at a worksite, rut characteristics associated with the rut, wherein the rut characteristics are indicative of at least one of a shape of the rut, a depth of the rut, a ridge height of the rut, a ridge width of the rut, a depression width of the rut, or a material displacement associated with the rut;
      acquiring location data indicative of a current location of a work machine relative to the rut; and
      generating control data to cause an actuator of the work machine to perform a mitigation operation based on the rut characteristics and the current location.
11. The system of clause 10, wherein the one or more processors are configured to execute the instructions to further cause the system to receive the rutting data from an aerial vehicle.
12. The system of clause 10 or clause 11, wherein the rutting data comprises at least one of precipitation data, soil data, tillage history data, soil compaction data, shadow data, work machine data, or user input data.
13. The system of any one of clauses 10 to 12, wherein the rutting data comprises irrigation system data, and wherein the irrigation system data is indicative of at least one of:
   a pivot center associated with a pivot irrigation system, a number of irrigation towers of the pivot irrigation system, and an inter-tower distance associated with the pivot irrigation system,
   a track starting location associated with a first track of a plurality of tracks of a linear irrigation system, a directional heading associated with the linear irrigation system, and an inter-track distance associated with the linear irrigation system, or
   a starting location associated with a first boarder of a plurality of boarders of a boarder irrigation system, a spatial orientation of the first boarder, and at least one of a boarder width associated with the first boarder, an inter-boarder distance associated with the boarder irrigation system, a dike width associated with the boarder irrigation system, or an inter-dike distance associated with the boarder irrigation system.
14. The system of any one of clauses 10 to 13, wherein, to determine the rut characteristics, the one or more processors are configured to execute the instructions stored in the one or more memories to further cause the system to:
   process the rutting data using a rut model.
15. The system of clause 14, wherein the rut model includes at least one of a machine-learning component, a statistical model, or a deterministic model.
16. The system of clause 15, wherein the machine-learning component comprises an image classification component hosted by a computing device of the work machine.
17. One or more non-transitory computer readable media storing instructions operable to cause one or more processors to perform operations, the operations comprising:
   determining, based on rutting data associated with a rut in a ground surface at a worksite, rut characteristics associated with the rut, wherein the rut characteristics are indicative of at least one of a shape of the rut, a depth of the rut, a ridge height of the rut, a ridge width of the rut, a depression width of the rut, or a material displacement associated with the rut;
   acquiring location data indicative of a current location of a work machine relative to the rut; and
   generating control data to cause an actuator of the work machine to perform a mitigation operation based on the rut characteristics and the current location.
18. The one or more non-transitory computer readable media of clause 17, wherein the operations further comprise:
   generating representation data to cause an output component of a client computing device to present a representation of the rut characteristics.
19. The one or more non-transitory computer readable media of clause 17 or clause 18, wherein the mitigation operation is associated with a depth of the rut or a ridge of the rut.
20. The one or more non-transitory computer readable media of any one of clauses 17 to 19, wherein the mitigation operation comprises a rut elimination operation.

## Claims

1. A computer-implemented method, comprising:
determining, based on rutting data associated with a rut in a ground surface at a worksite, rut characteristics associated with the rut, wherein the rut characteristics are indicative of at least one of a shape of the rut, a depth of the rut, a ridge height of the rut, a ridge width of the rut, a depression width of the rut, or a material displacement associated with the rut;
acquiring location data indicative of a current location of a work machine relative to the rut; and
generating control data to cause an actuator of the work machine to perform a mitigation operation based on the rut characteristics and the current location.

2. The computer-implemented method of claim 1, wherein the rutting data comprises at least one of precipitation data, soil data, tillage history data, soil compaction data, shadow data, work machine data, or user input data.

3. The computer-implemented method of claim 1 or claim 2, further comprising: receiving the rutting data from at least one sensor associated with the work machine.

4. The computer-implemented method of claim 3, wherein the at least one sensor includes an image sensor, a radio detection and ranging, RADAR, sensor, a light detection and ranging, LIDAR, sensor, a geolocation device, a machine weight sensor, a ground height sensor, or a wheel velocity sensor.

5. The computer-implemented method of any one of the preceding claims, wherein the rutting data comprises irrigation system data.

6. The computer-implemented method of claim 5, wherein the irrigation system data is indicative of a pivot center associated with a pivot irrigation system, a number of irrigation towers of the pivot irrigation system, and an inter-tower distance associated with the pivot irrigation system.

7. The computer-implemented method of claim 5 or claim 6, wherein the irrigation system data is indicative of a track starting location associated with a first track of a plurality of tracks of a linear irrigation system, a directional heading associated with the linear irrigation system, and an inter-track distance associated with the linear irrigation system.

8. The computer-implemented method of any one of claims 5 to 7, wherein the irrigation system data is indicative of a starting location associated with a first boarder of a plurality of boarders of a boarder irrigation system, a spatial orientation of the first boarder, and at least one of a boarder width associated with the first boarder, an inter-boarder distance associated with the boarder irrigation system, a dike width associated with the boarder irrigation system, or an inter-dike distance associated with the boarder irrigation system.

9. A system, the system comprising:
one or more memories; and
one or more processors communicatively coupled to the one or more memories and configured to execute instructions stored in the one or more memories to cause the system to:
determining, based on rutting data associated with a rut in a ground surface at a worksite, rut characteristics associated with the rut, wherein the rut characteristics are indicative of at least one of a shape of the rut, a depth of the rut, a ridge height of the rut, a ridge width of the rut, a depression width of the rut, or a material displacement associated with the rut;
acquiring location data indicative of a current location of a work machine relative to the rut; and
generating control data to cause an actuator of the work machine to perform a mitigation operation based on the rut characteristics and the current location.

10. The system of claim 9, wherein the rutting data comprises at least one of precipitation data, soil data, tillage history data, soil compaction data, shadow data, work machine data, or user input data.

11. The system of claim 9 or claim 10, wherein the rutting data comprises irrigation system data, and wherein the irrigation system data is indicative of at least one of:
a pivot center associated with a pivot irrigation system, a number of irrigation towers of the pivot irrigation system, and an inter-tower distance associated with the pivot irrigation system,
a track starting location associated with a first track of a plurality of tracks of a linear irrigation system, a directional heading associated with the linear irrigation system, and an inter-track distance associated with the linear irrigation system, or
a starting location associated with a first boarder of a plurality of boarders of a boarder irrigation system, a spatial orientation of the first boarder, and at least one of a boarder width associated with the first boarder, an inter-boarder distance associated with the boarder irrigation system, a dike width associated with the boarder irrigation system, or an inter-dike distance associated with the boarder irrigation system.

12. The system of any one of claims 9 to 11, wherein, to determine the rut characteristics, the one or more processors are configured to execute the instructions stored in the one or more memories to further cause the system to:
process the rutting data using a rut model, wherein the rut model includes at least one of a machine-learning component, a statistical model, or a deterministic model.

13. One or more non-transitory computer readable media storing instructions operable to cause one or more processors to perform operations, the operations comprising:
determining, based on rutting data associated with a rut in a ground surface at a worksite, rut characteristics associated with the rut, wherein the rut characteristics are indicative of at least one of a shape of the rut, a depth of the rut, a ridge height of the rut, a ridge width of the rut, a depression width of the rut, or a material displacement associated with the rut;
acquiring location data indicative of a current location of a work machine relative to the rut; and
generating control data to cause an actuator of the work machine to perform a mitigation operation based on the rut characteristics and the current location.

14. The one or more non-transitory computer readable media of claim 13, wherein the mitigation operation is associated with a depth of the rut or a ridge of the rut.

15. The one or more non-transitory computer readable media of claim 13 or claim 14, wherein the mitigation operation comprises a rut elimination operation.
